# EUROPEAN PATENT SPECIFICATION

(11) **EP 0 352 948 B1**
(45) Date of publication and mention of the grant of the patent: **25.01.1995**
(21) Application number: 89307199.3
(22) Date of filing: 14.07.1989
(51) Int. Cl.: F16G 11/10

(54) **Releasable gripping, locking, coupling or support devices**
Lösbare Vorrichtungen zum Klemmen, Verriegeln, Verbinden oder Stützen
Dispositifs déblocables de serrage, de verrouillage, de liaison ou de support

(30) Priority: 21.07.1988 GB 8817410; 30.01.1989 GB 8901978; 23.08.1988 GB 8819928
(43) Date of publication of application: 31.01.1990
(73) Proprietor: LATCHWAYS LIMITED, Chippenham Wiltshire, SN15 3JL (GB)
(72) Inventor: Flux, Peter Robert, Calne Wiltshire (GB); Tupper, Alan William, Chippenham Wiltshire, SN14 6JZ (GB)
(74) Representative: Ben-Nathan, Laurence Albert

(56) References cited:
- EP-A- 0 120 164
- EP-A- 0 204 047
- EP-A- 0 379 282
- WO-A-84/01414
- DE-C- 397 995
- FR-A- 1 429 441
- GB-A- 2 161 883
- US-A- 1 340 851
- US-A- 3 101 641
- US-A- 4 420 860

## Description

### FIELD AND BACKGROUND OF THE INVENTION

This invention relates to releasable gripping or locking devices for use particularly, but not exclusively, in releasably arresting or locking an elongate memeber, either flexible or rigid, against movement in one direction.

It also relates to releasable locking, coupling or support devices for use particularly, but not exclusively, in latching a load, e.g. in a raised position, so that tension in a hauling line can be relaxed, or releasably coupling together two parts, or releasably securing one part in or to another part or structure, or forming a rotary coupling between two parts, or providing a releasable load support.

British Patent No. 2,140,495, corresponding to WO-A-8 401 414 and the preambles of claims 1 and 2, discloses releasable locking, coupling and support devices comprising two parts which are in, or can be brought into, a relatively slidable disposition, and interengageable latching means on the two parts. The latching means are engageable and disengageable automatically on relative movement of the parts in opposite directions. The latching means comprise an abutment on one of the parts, at least one rotary pawl on the other part to cooperate with the abutment in the latched condition and control means for positioning the pawl in a series of angular dispositions thereof during a latching or a release sequence of the latching means. The control means comprise resilient means provided on the same part as the pawl, to act on the periphery of the pawl, or a part associated therewith, to temporarily locate the pawl in said angular positions during the latching and release sequences.

In the devices of GB-A-2 140 495, which forms the preamble of Claim 1, the latching connection between the two parts is effected by the engagement of the pawl on one part with the abutment on the other part. The strength of the connection in the latched condition thereof depends on the strength of the pawl, requiring a relatively massive pawl for heavy load applications. Furthermore, when a single pawl is used there is an unbalanced seating of the latched parts. These disadvantages can be reduced to some extent by employing two or more latching pawls but this results in a more complicated construction.

### SUMMARY OF THE INVENTION

The object of the invention is to provide a releasable locking, coupling or support device of the general type described above, in which the applied load, which can be supported by the device in the latched condition thereof, is not determined predominantly by the strength of the pawl or other similar latching control mechanism. Embodiments of the invention also provide gripping or locking devices in the latching control mechanism can be completed enclosed.

The invention provides a releasable gripping or locking device according to Claim 1 or a locking device according to Claim 2.

In some embodiments said latching means may comprise an abutment on one of the components and a rotary pawl mounted on the other component for rotation between positions in which it does and does not cooperate with said abutment on relative movement of the components and positioning means for positioning the pawl in a series of angular positions thereof during a latching or release sequence of said latching means, said pawl being rotatable through complete revolutions thereof, and said positioning means comprising resilient means provided on said other component and engaged with the periphery of the pawl or a part associated therewith to temporarily locate the pawl in said angular positions during said latching and release sequences.

Said peripheral portion may have a generally parallelogram shape whereby said resilient means engage in succession each side of the parallelogram-shaped peripheral portion associated with the pawl as the pawl is rotated by engagement with and disengagement from said abutment so as to rotate and locate the pawl in the required angular position for the next step in a locking or release sequence.

Said pawl may have a pair of opposed peripheral edges which are formed with recesses or notches to receive a corner portion of said abutment in the latched condition of the latching means.

Said resilient means may comprise a control member and spring means acting thereon biassing the control member into engagement with the periphery of the pawl, or said part associated therewith.

In some arrangements, said gripping means may comprise a cam pivotally mounted on said body part and having a curved gripping surface shaped to cooperate with an opposed portion of the body part so as to narrow the gap therebetween on rotation of the cam in one direction so as to grip an elongate member extending in use therebetween. Pivotal mounting means for the cam may be slidably mounted on the body part for movement towards and away from said portion of the body part to facilitate threading of an elongate member through the device and to accommodate elongate members of different cross-sectional sizes, resilient means being provided to bias said pivotal mounting means towards said portion of the body part.

Said cam may act on an elongate member engaged in use with the device, through a pressure bar interlinked with the cam and acted on by said curved gripping surface. In other arrangements, said gripping means may comprise a pressure bar movably towards and away from an opposed portion of the body part in a generally parallel relationship thereto by a pivotal linkage between the pressure bar and the body part. The pressure bar may be movably mounted on the linkage towards and away from said opposed portion of the body part to facilitate threading of an elongate member through the device and to accommodate elongate members of different cross-sectional sizes, the pressure bar being resiliently biassed towards said opposed portion of the body part.

In said some and said other arrangements, said relatively slidable components of said control means may be in the form of a telescopic strut pivotally mounted at one end thereof on the body part and at the other end thereof on said cam or said linkage to control the pivotal movement thereof.

In said some arrangements, said latching means of said control means may act directly between said cam and said body part.

Moreover a pair of said cams may be pivotally mounted on said body part in an opposed relationship such that pivoting of the cams to their gripping positions progressively narrows the gap between the gripping surfaces of the cams thereby effecting a positive gripping of an elongate member extending, in use, therebetween.

In further arrangements, said locking means may comprise a locking member slidably mounted in a casing mounted on the housing with said control means acting between said locking member and said casing, said body part being in the form of a tubular housing for slidably receiving a shuttle member with said locking member projecting into the housing to engage the periphery of the shuttle member which has a peripheral recess formed to receive said locking member in the locking condition of said locking means and to cause said locking means to be brought into its free and locking conditions in accordance with sliding movements of the shuttle member in the housing.

In yet further arrangements, said body part may comprise a tubular housing for receiving a shuttle part having an engagement portion sliding disposed in the housing, said locking means comprising a toggle member having a cross-piece pivotally mounted with respect to the housing, one end portion of which can extend into the housing through an aperture in the wall thereof on rotation of the toggle member in one direction, and a leg portion depending from the cross-piece and having an end portion which can extend into the housing through an aperture in the wall thereof on rotation of the toggle member in the other direction, and said slidable components of said control means being in the form of a telescopic strut pivotally mounted at one end thereof with respect to the housing and at the other end thereof on the other end portion of the cross-piece of the toggle member, whereby sequential sliding movements of the shuttle part in the housing in opposite directions cause opposite ends of said engagement portion thereof to engage said cross-piece and leg of the toggle member in turn causing sequential free and locking conditions thereof under the control of said control means.

Said locking means may comprise at least one locking member provided on one of the components for movement generally transverse to said relative sliding direction of the components and cam means provided on the other of the components adapted to act on the locking member and to maintain it in a locked position thereof and to permit the locking member to move to an unlocked position thereof in accordance with relative sliding movement of the components between positions in which said latching means are in a latched or unlatched condition, or vice versa.

The invention also provides attachment apparatus comprising a plug-in attachment device having a locking mechanism in accordance with the invention and a receptor socket part for recessing in a wall structure into which the attachment device may be releasably secured in use.

The invention further provides a safety harness or safety belt attachment system comprising attachment apparatus as aforesaid and a safety line or lanyard for connection to the safety harness or belt and having an end connector for attachment to the plug-in attachment device. In some embodiments a plurality of receptor sockets may be provided for location at spaced positions in a wall structure, and said safety line or lanyard may have end connectors at respective opposite ends thereof for attachment to respective plug-in attachment devices. The safety line or lanyard passes through an eyelet on the safety harness or belt which does not permit passage of either end connector thereof. Such apparatus permits a wearer of the safety belt or harness to make a series of plug-in connections across the face of a wall structure without, even temporarily, being detached from the wall structure.

Embodiments of the invention will now be described by way of example and with reference to the accompanying drawings, in which:-
Fig. 1 is a front elevation of a rope gripping device embodying the invention;
Fig. 2 is a side view of the device of Fig. 1;
Fig. 3 is a cross-section along line A-A in Fig. 1;
Fig. 4 is a vertical cross-section through the device of Fig. 1 shown in a release position;
Fig. 5 is a vertical cross-section through the device of Fig. 1 shown in a rope gripping condition;
Fig. 6 is a diagrammatic vertical section through the device of Figs. 1 to 5 shown in a released ready condition when a rope of smaller diameter than that illustrated in Fig. 4 is engaged with the device;
Fig. 7 is a diagrammatic vertical sectional view through a second embodiment of a rope gripping device according to the invention;
Fig. 8 is a diagrammatic vertical cross-sectional view through a third embodiment of a rope gripping device according to the invention;
Fig. 9 is a vertical cross-sectional view through a fourth embodiment of a rope gripping device according to the invention;
Fig. 10 is a cross-sectional view along the line B-B in Fig. 9;
Fig. 11 is a diagrammatic perspective view of a further embodiment of a rope gripping device in accordance with the invention;
Fig. 12 is a diagrammatic perspective view of the device of Fig. 11 with a cover fitted thereover;
Figs. 13A - 13D are diagrammatic illustrations of a locking assembly in accordance with the invention shown in four respective positions of a locking and release sequence of operation thereof;
Figs. 14A - 14D are diagrammatic representations of a modified form of a releasable locking assembly in accordance with the invention shown in four respective positions of a locking and release sequence of operation thereof;
Figs. 15A - 15C are, respectively, a vertical cross-section of an alternative locking unit for use in devices according to the invention in a release condition, a similar section of the locking unit in its locked condition and a diagrammatic side view of the latching elements of the unit;
Figs. 16A - 16E are, respectively, an end view of the cylindrical part of a locking unit which is a modified form of the unit of Figs. 15A - 15C, a diagrammatic vertical section through an upper portion of the cylindrical part, a diagrammatic side view of an upper portion of the sliding rod assembly of the unit, a view similar to Fig. 16F showing parts of the sliding assembly in a separated condition, an under plan of the locking ring of the sliding assembly and a top plan of the locking ring;
Fig. 17 is a side view of a releasable coupling device embodying the invention comprising a body member which can be plugged into a socket part;
Fig. 18 is a cross-section through the device of Fig. 17;
Fig. 19A is a diagrammatic side view of the device of Figs. 17 and 18 on a reduced scale and in an engaged condition;
Fig. 19B is a vertical cross-section through Fig. 19A; Figs. 20A - 20C are diagrammatic cross-sections through the plug-in body member of the embodiment of Fig. 19 showing the respective positions in a locking sequence thereof;
Fig. 21 is a diagrammatic cross-section through a modified embodiment of the releasable coupling of Fig. 19 wherein the socket part is open ended;
Fig. 22A is a side view of an end portion of a plug-in connector of a further embodiment of a releasable coupling in accordance with the invention;
Fig. 22 B is a cross-section through the end portion of the plug-in part when engaged in a socket part of the coupling;
Figs. 23A - 23C are diagrammatic cross-sections through a portion of the socket part of Fig. 22B showing different positions of an internal locking mechanism thereof during a locking sequence;
Figs. 24A and 24B are diagrammatic cross-sections through a locking mechanism embodying the invention for use on an elongate member such as a wire, rope, bar or tube, the mechanism being shown in an unlocked and locked condition respectively;
Fig. 25 is a diagrammatical cross-sectional detail of an alternative form of frictional gripping means;
Figs. 26A and 26B are diagrammatic cross-sectional views of a device similar to that shown in Fig. 24 but adapted to be sensitive to the running speed of the elongate through the device, the locking mechanism thereof being shown in a free condition and a locked condition, respectively;
Figs. 27A and 27B are diagrammatic cross-sectional views through a further form of locking mechanism embodying the invention for providing a friction lock with a piece of bar stock with the device being shown in an unlocked and a locked condition, respectively;
Figs. 28A and 28B are, respectively, a side view of a lock body provided with a locking mechanism according to the invention and a cross-sectional view thereof when engaged in a tubular element;
Figs. 29A and 29B are, respectively, a side view and a cross-sectional view of a socket for location in a wall or partition member to receive a plug-in type locking mechanism as illustrated in Fig. 32 of the drawings;
Fig. 30 is a cross-section through another form of wall mounted socket for receiving a locking mechanism of the type shown in Fig. 32;
Figs. 31A and 31B illustrate, respectively, a side view and a cross-section through a further type of wall mounted socket for receiving a locking mechanism of the type shown in Fig. 32;
Figs. 31C and 31D illustrate, respectively, fragmentary cross-sections through the socket of Figs. 31A and 31B showing securing means therefor;
Figs. 32A, 32B and 32C illustrate, respectively, a side view, a transverse cross-section, and a longitudinal cross-section through a plug-in type mechanism according to the invention for cooperating with wall mounted sockets of the type illustrated in Figs. 13 to 15;
Fig. 33 is a diagrammatic front view of a safety harness or safety belt securing lanyard for cooperation with the plug-in locking mechanism shown in Fig. 32;
Fig. 34 is a diagrammatic front view of the lanyard securing means of Fig. 33 provided with a housing element for receiving and retaining the lanyard end attachment hooks;
Fig. 35 is a plan view of the assembly of Fig. 34; and,
Fig. 36 is an end view of the hook housing shown in Figs. 34 and 35.

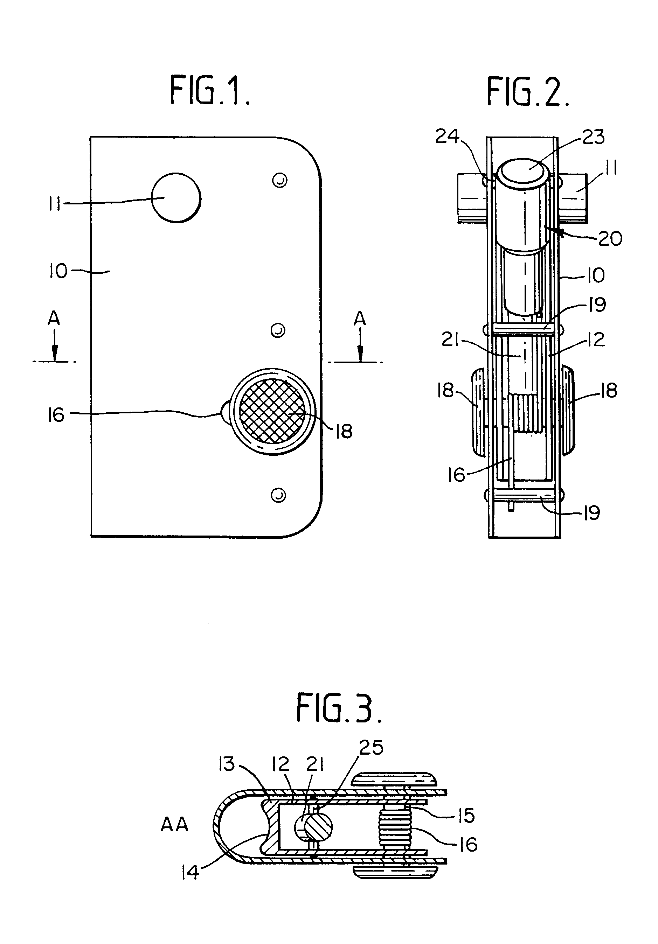

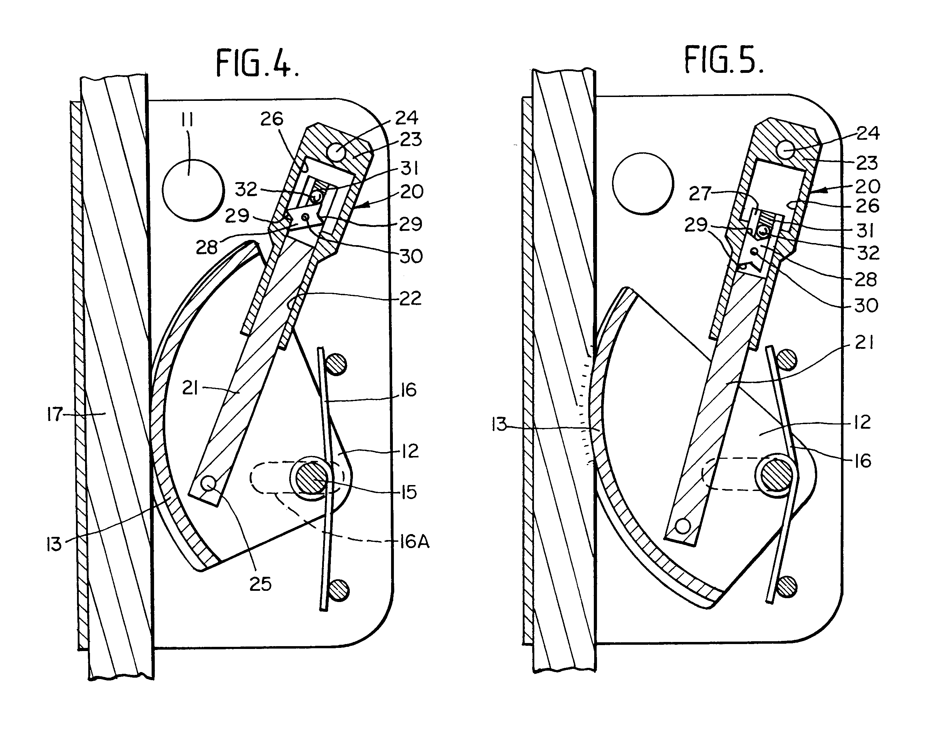

Referring to Figs. 1 to 5, there is shown a first embodiment of a rope grip according to the invention. It will be appreciated that the device can be used for gripping other forms of elongate members than ropes, for example rods or tubular rod-like members which may be rigid or flexible members. The rope gripping assembly comprises a body part (10) in the form of a plate member formed into a generally U-shape when viewed in cross-section as seen in Fig. 3. A cylindrical mounting pin (11) extends through aligned apertures in the side plate portions of the body part (10) and projects outwardly thereof to provide a pair of mounting trunnions. A gripping cam member (12) is pivotally mounted between the side flanks of the body part (10). The cam is also formed as a U-shaped member in cross-section as seen in Fig. 3 and is generally triangular in shape when viewed from the side as seen in Fig. 4. The base portion of the cam is formed with an arcuate cam engagement surface (13) formed with a curved groove (14) in its engagement surface, of progressively increasing depth in the direction from the top portion of the cam surface (13) to the bottom portion thereof. The cam is pivotally mounted on a spindle (15) which extends through aligned slots (16A) in the flanks of the body part (10) and through aligned apertures in the side flanks of the cam member (12). A torsion spring (16) acts on the spindle (12) to bias the cam in the direction towards the base of the body part (10) so as to exert a light pressure against a rope or other elongate member, (17) threaded through the device. Finger grips (18) are affixed to the portions of the spindle (15) which projects outwardly of the flank portions of the body part to facilitate gripping thereof so as to move the spindle and the cam against the biassing pressure of the torsion spring (16) away from the base of the body part thereby opening the gap therebetween to assist in a threading operation of a rope through the device. As seen in Figs. 2 and 4, the opposite end portions of the torsion spring (16) act against fixed pins (19) extending between the flank portions of the body part (10).

The operation of the gripping cam (12) is controlled by a locking unit (20) which comprises a rod (21) slidably received in a cylindrical bore (22) of a casing part (23). The closed end of the casing part (23) is pivotally mounted on a fixed pin (24) extending between the flank portions of the body part (10) and the free end of the rod (21) is pivotally mounted on a fixed pin (25) extending between the flank portions of the cam member (12).

The cylindrical bore (22) of the casing at its closed end has an enlarged diameter portion (26). The end of the rod within the casing (23) is formed with a transverse slot (27) to receive a rotary locking pawl (28) which is generally rectangular in cross-section and has a pair of notches (29) formed in the opposite smaller end surfaces thereof. The pawl (28) is rotatably mounted on a fixed pin (30). An axial bore (31) is formed in the end surface of the rod to intersect the slot (27). A spring-loaded control ball assembly (32) is located within this bore (31) and retained therein by any suitable means acting on the free end of the compression spring loading the ball. The ball acts on the peripheral surfaces of the cam (28) to temporarily locate the cam in a series of angular positions during latching and unlatching sequences which will be described below.

In the release position of the rope gripping device, as illustrated in Fig. 4, the rod (21) is prevented from moving further out of the casing (23) by latching engagement of the pawl (28) with the annular shoulder formed between the smaller and larger diameter portions (22 and 26) of the bore in the casing so that the cam is restrained from pivotting in an anti-clockwise direction about pivot (15). In this position, the rope can be freely moved in a downward direction and the cam member (12) is restrained from pivotal movement into a gripping position in which downward motion of the rope is arrested. In order to render the rope grip operative to arrest downward movement of the rope, the rope is first hauled in an upward direction which causes the cam to rotate in a clockwise direction about pivot (15). This causes rod (21) to be slid further into the casing (26) so that the latching pawl (28) is disengaged from the annular shoulder between bore sections (22 and 26). On such disengagement, the control ball (32) acts on the pawl to rotate it about pin (30) into a disposition in which its longer sides are generally transverse to the axis of the rod. When the rope is then subsequently moved downwardly, the frictional grip with the cam causes the cam member to rotate anti-clockwise and this motion is then no longer restrained by the latching pawl. When the pawl engages the aforesaid shoulder, it then does so with its lower longer side and such engagement causes the pawl to rotate to a position in which its longer sides are generally parallel to the axis of the rod as illustrated in Fig. 5. The cam is therefore free to continue to rotate anti-clockwise and its camming surface (13) is so shaped that such motion causes the cam to dig in to the rope and jam it firmly against the base portion of the body part (10) thereby fully locking the rope against further downward movement, as illustrated in Fig. 5.

In order to release the rope again, the rope is once more hauled upwardly thereby causing the cam to rotate in a clockwise direction about its pivot (15) to a position in which the rotary cam is once more positioned in the enlarged diameter portion (26) of the bore in the casing (23). When located therein, the spring bias control ball (32) moves downwardly until it is engaged in the base portion of the V-shaped notch (28) in the upper peripheral edge of the pawl (28), in which position the pawl projects slightly outwardly of the slot (27) so that on subsequent downward movement of the rope and therefore the cam member (12) and the rod (21), the shoulder in the casing bore is received in the V-shaped notch in the lower edge of the cam causing a latching condition as illustrated in Fig. 4 in which free downward movement of the rope is permitted.

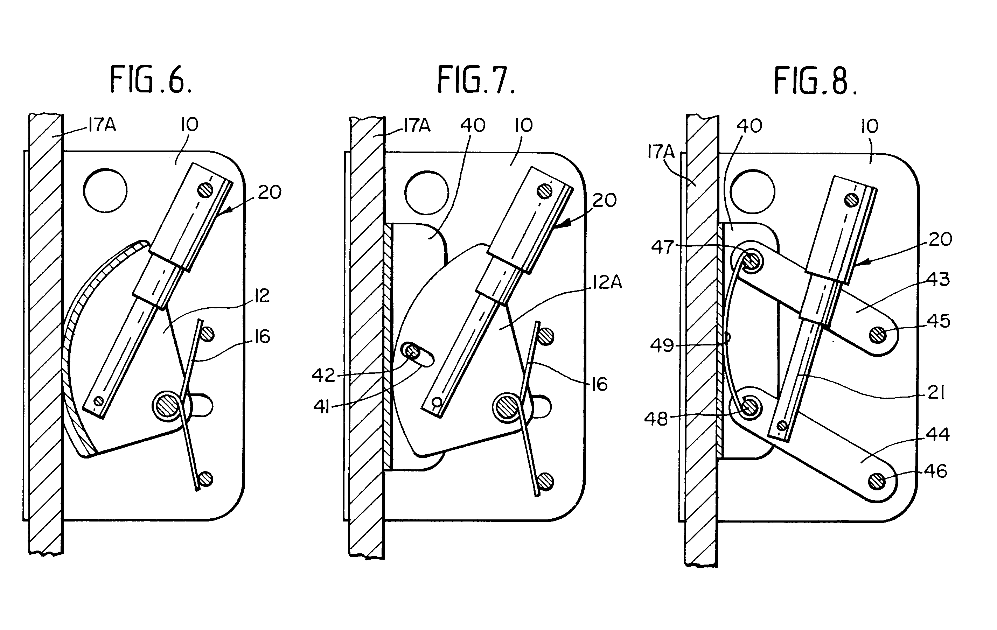

Fig. 6 illustrates a smaller diameter rope (17A) engaged with the above-described rope grip whereby the cam (12) is biassed into engagement with the smaller diameter rope (17A) by the torsion spring (16).

Fig. 7 shows a modified embodiment in which the cam (12A) is provided by a single plate member and a U-section pressure plate (40) is acted upon by the arcuate camming surface to provide the frictional engagement with the rope (17A). The cam is formed with an obliquely extending slot (41) through which a pin (42) extends, the pin being fixedly located to the side flanks of the pressure plate (40). The shape of the arcuate camming surface of the cam (12A) and the direction of the slot (41) enables an even pressure to be applied along the gripping surface of the pressure plate where it engages the rope (17A). The operation of this embodiment is generally similar to that described above in relation to the first embodiment.

Fig. 8 shows an alternative embodiment in which the pressure plate (40) is controlled by a pivotal linkage instead of the pivotally mounted cam. The linkage comprises a pair of parallel links (43,44) pivotally mounted at a first pair of ends thereof on pins (45,46) fixed to the flank portions of the body part (10) and pivotally mounted at their opposite ends on pins (47,48) associated with the flank portions of the pressure plate (40). The swinging movement of the links (43,44) is controlled by a locking unit (20), which corresponds to the above-described locking unit of the previous embodiments, the free end of the rod (21) of this unit being pivotally connected to the lower link (44). The pins (47,48) are engaged in slots in the flank portions of the pressure plate (40) to allow relative movement of the pressure plate to accommodate different size diameters of rope (17A). The pressure plate is biassed against the rope by a leaf spring (49), the ends of which are engaged with the pins (47,48), respectively. The operation of this embodiment is generally similar to the previous embodiments and will therefore not be described further.

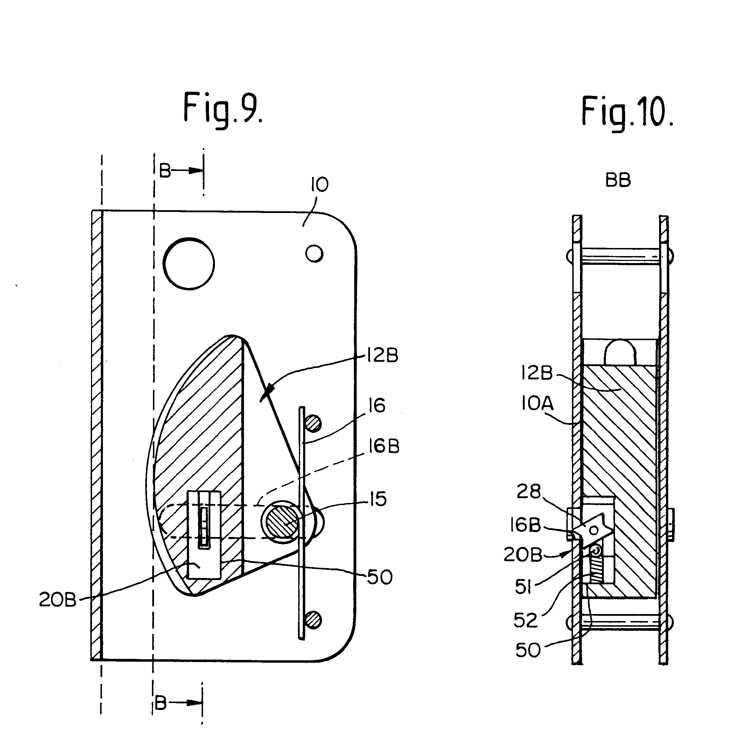

The embodiment shown in Figs. 9 and 10 utilizes the general form of the gripping device of Figs. 1 to 5 and employs a similar body part (10) and locking cam (12B) pivotally mounted on a spindle (15) and biassed towards a rope under the action of a torsion spring (16). However in this embodiment, the cam (12B) is a generally solid member and the locking unit (20B) is incorporated in the cam to lock directly with respect to a side flank portion (10A) of the body part (10). In this embodiment, the slot (16B) in the flank portion (10A) has a longer extent in the corresponding slot (16A) of the first embodiment and forms one part of the control unit (20B). The rotary pawl (28) is located in a cavity (50) formed in a side face of the cam member (12B) with the spring bias control ball (51) located in a bore (52) formed in the cam (12B) to act on and position the pawl during locking and release cycles. With the pawl locked in the slot as shown in Fig. 10, the cam (12B) is prevented from rotation anti-clockwise into jamming engagement with a rope. In order to obtain a locking function, the rope is as before, hauled upwardly in order to rotate the cam clockwise so that the locking pawl (28) is positioned by the control ball (51) with its longer sides generally horizontal as seen in Fig. 10 and projecting into the slot (16B). When the rope is then hauled downwardly, the cam member is rotated anti-clockwise and the cam member engages the bottom wall of the slot with its lower longer peripheral edge, which is unnotched, whereby the cam is rotated to a position in which it is contained fully within the cavity (50) in the camming member which is then brought into position jamming engagement with the rope. In order to release the rope, it is again hauled upwardly to rotate the camming member anti-clockwise about its pivot (15) whereby the spring bias control ball then acts on a notched peripheral surface of the pawl (28) to bring it into a position whereby that notched lower edge projects slightly into the slot (16B) so that on subsequent downward movement, the lower edge of the slot becomes latched in the notched edge of the cam as shown in Fig. 10.

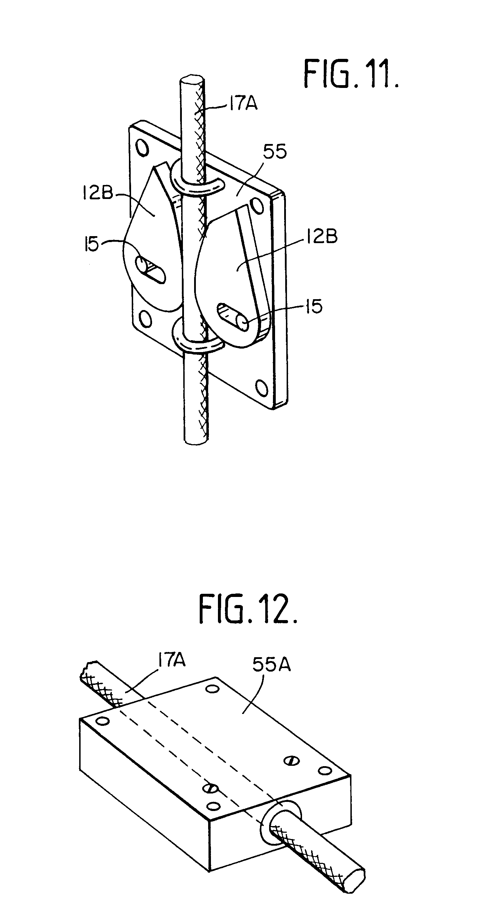

Fig. 11 shows an embodiment which is closely based on the construction as shown in Figs. 9 and 10. In this case, a pair of cam members (12B) are pivotally mounted on a common base plate (55) with their arcuate camming surfaces facing one another. The cams have the same form and operation as the cam (12B) in the Figs. 9 and 10 embodiment with locking pawls, not illustrated in Fig. 11, providing a locking control unit in conjunction with juxtaposed elongate slots provided in the base plate (55). A rope is fed between the two cam members which are initially held by the locking cams in a release position. When it is required to arrest further downward movement of the rope, the rope is first hauled upwardly to rotate the cams about their pivotting spindles (15) in directions away from one another which causes unlocking of the latching pawls controlling the cams so that on subsequent downward movement of the rope, the cams are free to fully rotate towards one another thereby firmly gripping the rope and arresting further downward movement thereof. This construction can be used in dispositions other than horizontal dispositions, to provide an automatically operable locking cleat device which can be operated from a remote location by applying suitable hauling forces on the rope from that remote location. In use, the unit will be provided with a cover (55A) as shown in Fig. 12 so that the mechanism becomes totally enclosed.

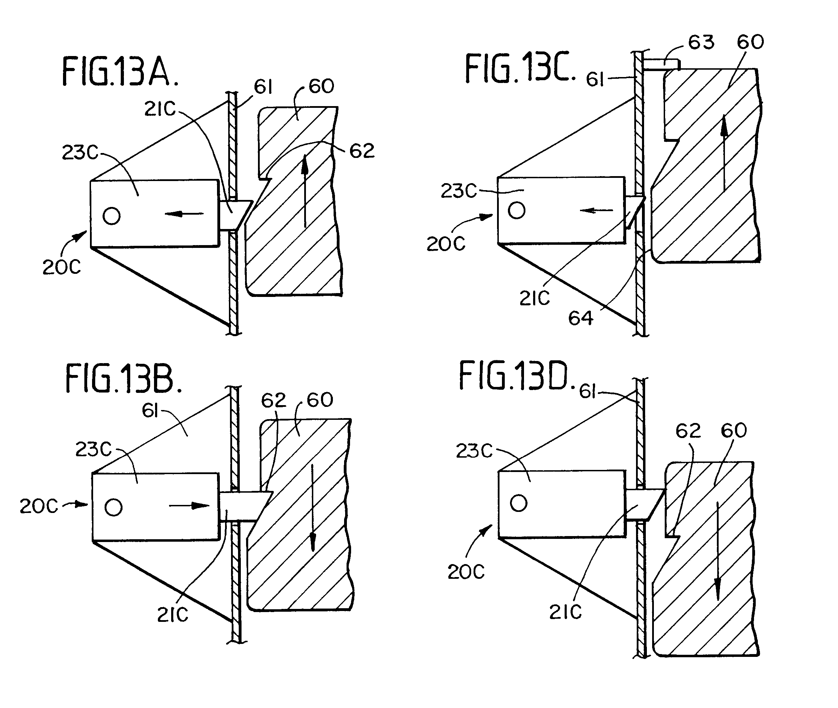

Figs. 13A - 13D illustrate another embodiment in which a locking unit having the same constructional form as the control unit (20) described above is used as a readily releasable catch in conjunction with a slidable shuttle member used in conjunction therewith. However in this embodiment, the lock unit (20C) has a spring bias acting between the closed end of the casing unit (23C) and the opposed end of the rod (21C) biassing the rod in the direction outwardly of the casing towards the shuttle (60). The shuttle (60) which is movable in a generally cylindrical housing (61) has an annul an notch (62) in its outer periphery, the notch having a generally radial upper portion and an obliquely slanting lower portion. Above the notch (62), the shuttle has a reduced external diameter compared to the lower portion thereof which is a sliding fit in the cylindrical housing (61). The control unit (20C) is fixedly secured to the external surface of the housing (61) and the rod (21C) projects through an aperture in the wall of the housing. The end of the rod has an oblique surface corresponding to the oblique lower surface of the notch (62).

A sequence of operation is illustrated in Figs. 13A - 13D. In Fig. 13A, as the shuttle is moved upwardly, the lower inclined surface of the notch (62) engages the correspondingly inclined end portion of the rod (21C) to move it inwardly of the casing (23C) whereby the pawl is located in the enlarged end portion of the bore in the casing allowing it to be rotated to a release or unlatched condition as described above in relation to the embodiment of Figs. 1 to 5. On subsequent downward movement of the shuttle (60), the rod in its released condition is urged into the notch (62) under the aforesaid spring bias acting thereon so that it becomes locked as shown in Fig. 13B. On subsequent upward movement of the shuttle (60), the rod (21C) is again pushed into the casing (23C) such that the locking pawl is then positioned by the spring bias control ball acting thereon such that on subsequent downward movement of the shuttle (60) from the position shown in Fig. 13C, the locking pawl becomes latched with the shoulder between the smaller and larger diameter portions of the bore in the casing (23C) so that it does not fully engage in the notch (62) allowing the shuttle to move downwardly to the position shown in Fig. 13D. This sequence of operation is repeated for further locking and release operations. In order to prevent disengagement of the end of the rod (21C) from the peripheral surfaces of the shuttle (60), it is necessary to provide annular end stops (63) as illustrated in Fig. 13C, to ensure that the above-described sequential locking and release cycles of the control unit (20C) are maintained. If the shuttle moved completely past the rod (21C) in an upward direction, then the rod which is biassed in the outward direction would engage end surfaces of the shuttle and prevent subsequent movement thereof. If more upward movement of the shuttle is required and an annular end stop is not provided, a longer radial shoulder (64), as illustrated in Fig. 13C, can be substituted.

This type of locking system can be used in conjunction with ropes, for example at a mast head where it may be desirable to provide a readily releasable locking function which can be operated at a remote location at deck level merely by applying hauling forces to the rope. Such a system could also be used in connection with a scaffolding system providing readily releasable locking facilities for scaffolding sections.

Such a system could also be used as a door or cabinet closure. It could be used as a catch to secure a loft hatch. As the unit is used as a catch, the load is taken in shear across the plunger. The catch acts in effect as a direct load but the load bearing capabilities are proportional to the strength of the plunger rather than that of the latching pawl

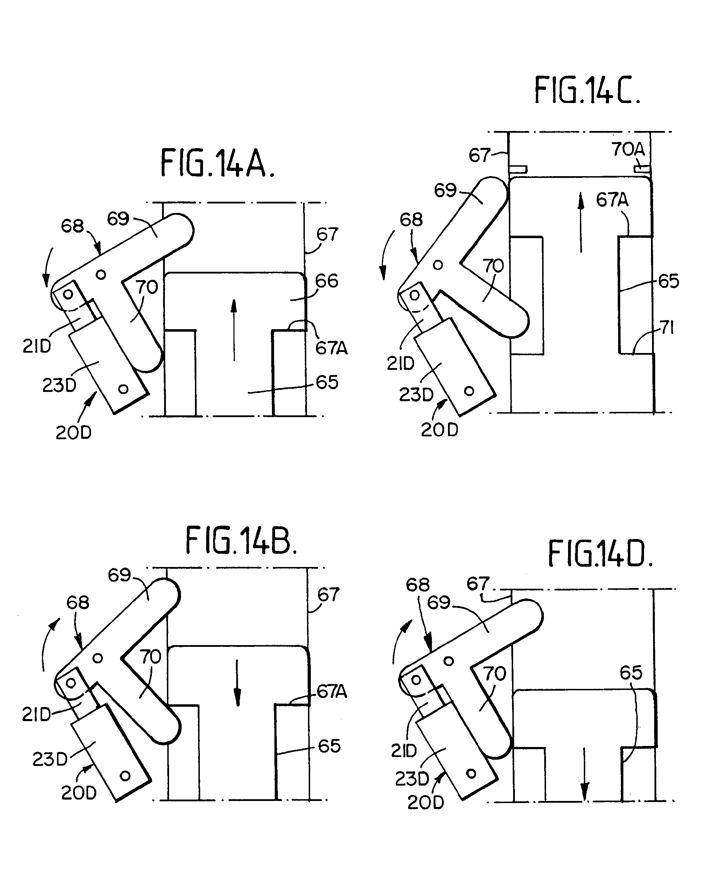

Figs. 14A to 14D illustrate a modified embodiment of the locking arrangement shown in Figs. 13A - 13D. In this case, the shuttle (65) has an upper head portion (66) slidably received in tubular housing (67) and a lower reduced diameter portion (65) defining an annular shoulder (67A) therebetween. The lock mechanism (20D) has its casing portion (230) pivotally connected with respect to a portion fixed to the housing (67). The rod (21D) of the locking unit is pivotally connected to a rotary toggle member (68). The toggle member has a cross-piece (69) which projects through a slot in the wall of the housing (67). It further has a depending leg section (70) which also can engage through a respective slot provided in the wall of the housing (67). The piston rod is pivotally connected to one end portion of the cross-piece (69). A locking and release sequence of this apparatus will now be described. In Fig. 14A, upward movement of the shuttle (65) engages the cross-piece (69) of the toggle member thereby rotating the toggle member in an anti-clockwise direction. This causes the piston rod (21D) to be moved into the casing (23D) whereby the rotary pawl is positioned as described above in relation to the embodiment of Figs. 1 to 5, in a position so that on subsequent outward movement of the rod (21D), it becomes latched on the internal shoulder of the bore provided in the casing (23D). Therefore on subsequent downward movement of the shuttle (65), the radial shoulder (67A) thereof now engages the leg portion (70) of the toggle member, which now projects inwardly of the housing (67) so that the toggle member now rotates in the clockwise direction thereby causing a locking condition of the locking control movement (20D). Further downward movement of the shuttle (65) is therefore arrested. In order to release the shuttle, it is moved upwardly as shown in Fig. 14C such that it engages the cross-piece (69) of the toggle member causing the toggle member to rotate in an anti-clockwise direction. This causes the piston member (21D) to be moved inwardly of the casing (23D) whereby the rotary pawl is disengaged from the internal shoulder and is positioned by its spring bias control ball to a position whereby it will not interfere with subsequent outward movement of the control rod (21D) in relation to the casing (23D). Therefore on subsequent downward movement of the shuttle (65) as shown in Fig. 14D, the toggle is caused to rotate in the clockwise direction such that the leg portion (70) thereof is moved outwardly of the housing (67) which is permitted by the release condition of the control unit (20D) as described above. In this embodiment, an upper annular end stop (70A) is formed on the inner periphery of the housing (67) to prevent upward movement of the shuttle (65) whereby the radial shoulder (67A) thereof moves above the cross-piece (69) of the toggle thereby interfering with the above-described sequential locking and release sequence of the control unit (20D).

A second radial shoulder could be positioned on the shuttle (65) to prevent upward movement where an annular end stop (70A) in the housing (67) would be inappropriate. Toggle end (70) would engage in the recess between the two shouldered sections (66 and 71) and act as an end stop.

Free movement of the toggle (68) in conditions of vibration or sudden shock movements could be controlled by a frictional element about its pivot, or a frictional element between the piston member (21D) and the housing (23D) of the locking unit (20D), this acting as a damping element.

Such a system provides an indirect locking unit. It is useful for applications where the locking unit needs to be a sealed unit and remote from the main lock, which could be in a filthy environment. Possible applications include rope grips, tube clamps and scaffold staying adjusters.

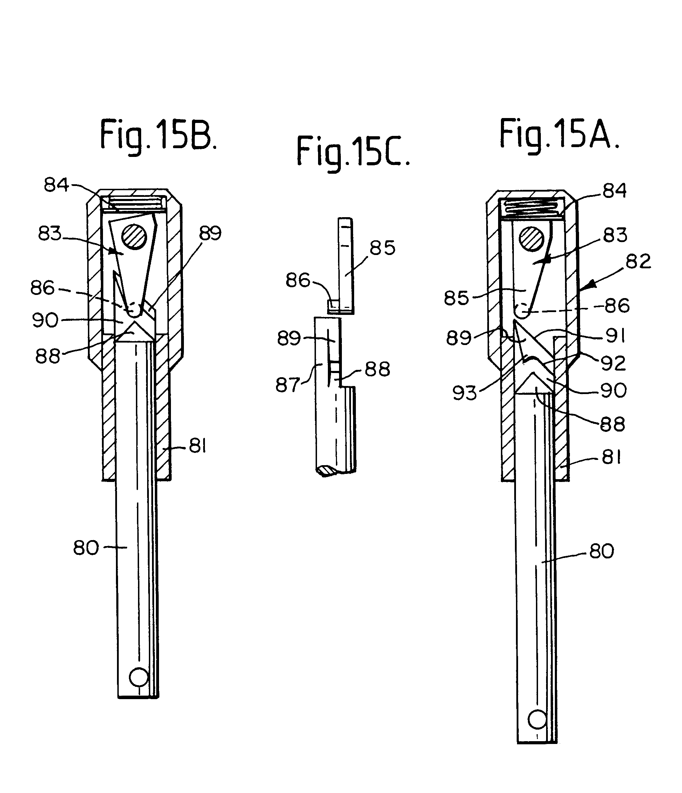

Figs. 15A - 15C illustrate another form of locking unit which can be used in the rope gripping devices of Figs. 1 - 7. The locking unit comprises a rod (80) slidably received in a cylindrical part (81) fixed in a casing (82) which is closed at its upper end. A latching member (83) is pivotally mounted within the upper end of the casing (82) with a spring biassed plate (84) acting on a flat upper end of the member (83) biassing it to a position, as shown in Fig. 15A, in which its depending elongate leg portion (85) is positioned to one side of the casing axis. A laterally extending peg (86) is provided at the end of the leg portion (85).

The upper end of the rod (80) is stepped inwardly portion (87). The side wall of stepped portion (87) is formed with a lower triangular lateral projection (88) and an upper lateral projection (89) spaced therefrom to form a latching keyway (90) therebetween. The upper surface of the projection (89) is a ramp surface (91) extending obliquely to the axis of the rod. The lower surface (92) initially extends generally parallel to the upper ramp surface (91). It is then formed with a hook formation (93) providing a detent for the peg (86) positioned generally above the apex of the triangular projection (88).

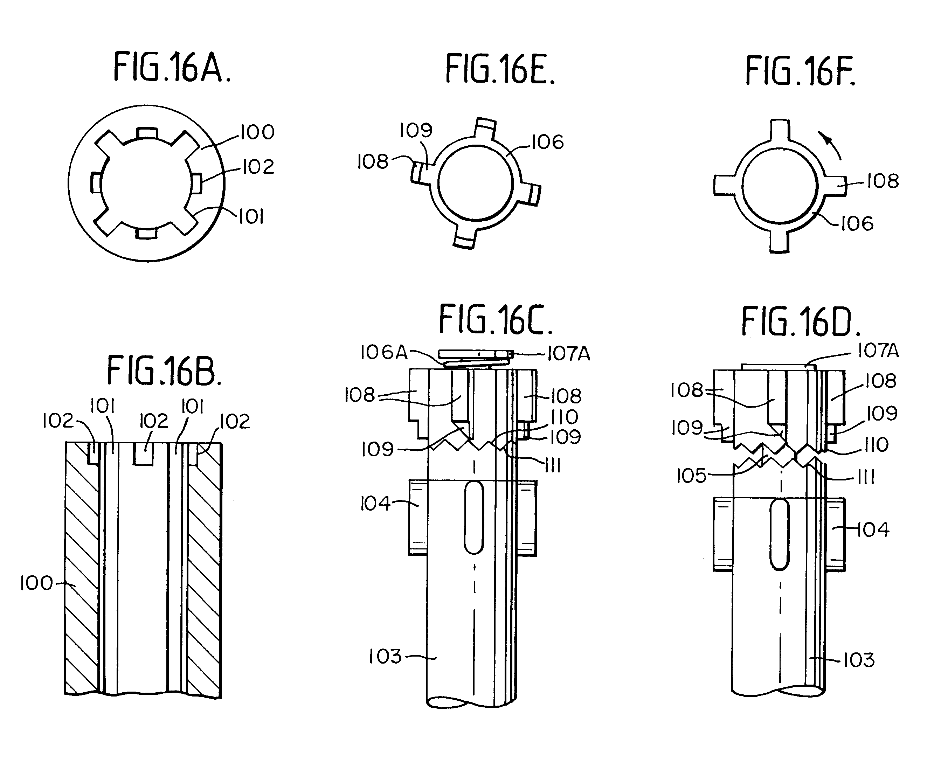

In operation, when the rod (80) is moved into the casing (82) from the release position shown in Fig. 15A, the peg (86) engages the oblique ramp surface (91) causing the latching member (85) to be pivotted against its bias. When the upper projection (89) passes the peg (86), the spring bias acting on plate (84) causes the latching member (83) to pivot so that the peg (86) engages in the keyway (90) until it latches with the hook portion (93) as illustrated in Fig. 15B, whereby the unit is in its locked condition preventing free downward movement of the rod (80). In order to release the unit, the rod (80) is again moved upwardly whereby the peg (86) disengages from the hook formation (93) and passes out of the left-hand side of the keyway (90), under the spring bias on the latching member (83) so that on subsequent downward movement of the rod (80) the latching member (83) is disengaged from the latching keyway (90) and when the rod has moved sufficiently downwardly, returns to its position shown in Fig. 15A. Figs. 16A - 16E illustrate a further form of locking unit which can be used in the devices of Figs. 1 - 7. The locking is similar to that of Figs. 15A - 15C but has a modified cylindrical part (100) and a modified sliding rod assembly (103). Furthermore, no pivotal latching member (83) is provided within the casing (82). In this modified locking unit, as seen in Fig. 16A, the cylindrical part (100) has a series of four deep, internal, axial recesses (101) spaced at 90° intervals and a series of four shallow, axial recesses (102) spaced at 90° intervals; the two series of recesses being offset at 45° with respect to one another. The shallow recesses (102) extend only a short distance into the cylindrical part (100) as seen in Fig. 16B.

The upper end of the rod (103), as seen in Fig. 16C, has a series of external splines (104) spaced at 90° slidingly engaging in the deep recesses (101) in the cylindrical part (100). The upper end of the rod (103) has an integral, axial spigot (105) on which a rotatable locking ring (106) is mounted. An annular collar (107A) is located at the upper end of the spigot (105) to provide an abutment for a spring (106A) engaging in a recess in the upper end of the ring (106) and biassing the locking ring (106) downwardly. The locking ring (106) has a series of splines (108) which are spaced at 90° intervals in the circumferential direction. The lower part of each spline (108) is an inwardly stepped portion (109) which fits into the shallow recesses (102) in the cylindrical part (100). The leading edge of each inwardly stepped portion (109) is slanted as shown in Figs. 16C and 16D so that when that portion engages in a shallow recess (102) or a deep recess (101) in the cylindrical part (100) during latching and unlatching sequences of the locking unit, the locking ring (106) is rotated in the direction of the arrow in Fig. 16F.

The locking ring (106) and the upper end of the rod (103) have mating serrations (110,111) normally in engagement with one another until the rod (103) is moved downwardly so that its upper end is contained within the cylindrical part (100). This movement causes the slanted leading edges of the stepped portions (109) of the locking ring splines (108) to engage in the shallow or the deep recesses (102,101) in the cylindrical part (100) depending on the orientation of the ring (106) causing disengagement of the serrations (110,111) and rotation of the locking ring (106) so that the serrations are misaligned as illustrated in Fig. 16D. If the splines (108) engage in the shallow recesses (102), then the downward movement of the locking ring (106) and hence the rod (103) is limited causing a locking condition of the locking unit. To cause unlocking, the rod (103) is moved upwardly again whereby the serrations (110,111) interengage causing further rotation of the locking ring (106) to the next indexing position whereby on subsequent downward movement of the rod (103) the splines (108) engage in the deeper recesses (101) in the cylindrical part (100). The first portion of the splines to so engage are the leading edges of the stepped portions (109) thereof causing disengagement of the serrations (110,111) with separation of the ring (106) from the upper end of the rod (103) as illustrated in Fig. 16D, with the locking ring (106) then being rotated with respect to the rod (103) to allow engagement of the splines (108) within the deep axial recesses (101) in the cylindrical part (100). This permits the rod (103) to slide downwardly within the cylindrical part (100) thereby providing an unlatched condition thereof. This sequence is repeated to bring about further latched and unlatched conditions of the unit on subsequent up and down movements of the rod (103) within the cylindrical part (100).

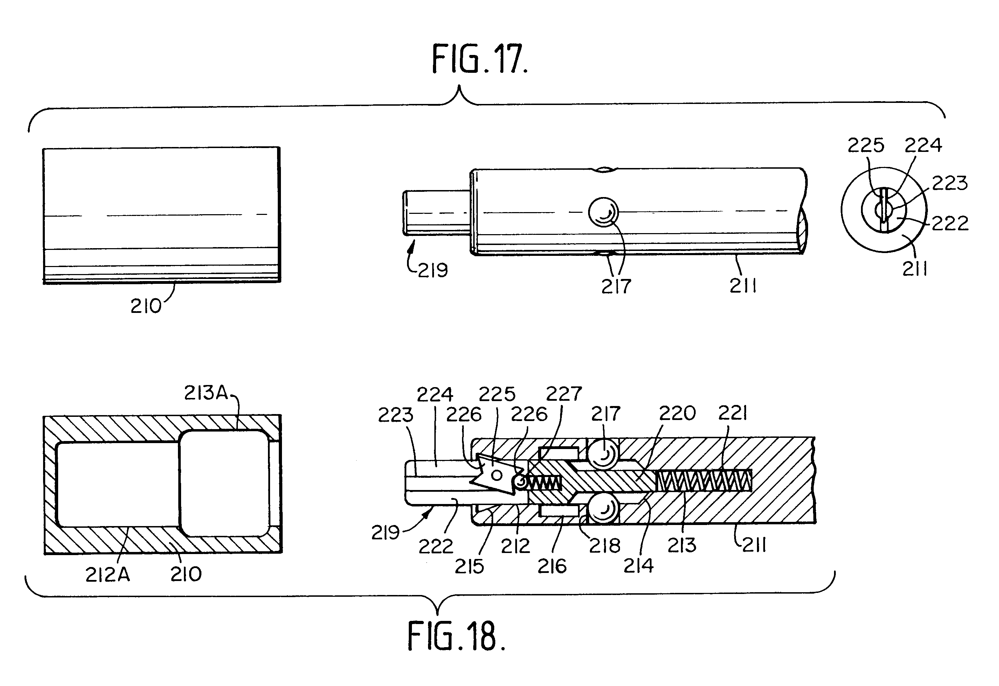

Referring to Figures 17 - 36 of the drawings, there are shown a number of different embodiments of locking or coupling devices which utilize a locking mechanism according to the invention provided on one of the cooperating parts for effecting, when actuated, a locking engagement with the other of those parts.

The embodiment shown in Figs. 17 and 18 comprises a releasing locking device including a socket part (210) into which a body part (211) can be plugged, with a locking mechanism in accordance with the invention being provided on the body part (211). The socket part (210) has a generally cylindrical, blind cavity (212A) for receiving the body part (211) with an enlarged annular recess (213A) being formed adjacent the open end of the cavity (212A) for receiving parts of the locking mechanism associated with the body part (211), as described below.

The body part (211) comprises a generally cylindrical member formed with an axial bore (212) in one end thereof which merges into a smaller diameter bore (213) with a frusto-conical shoulder (214) therebetween. The bore (212) is formed with an annular undercut portion (215) and an annular recess (216) spaced therefrom. Just beyond the recess (216), on the side remote from the undercut (215), a plurality, i.e. 2, 3, 4 or more, of equi-angularly spaced apertures (218) extend through the wall of the bore (212) to receive a corresponding number of locking balls (217). The walls of the apertures (218) converge slightly in a radially outward direction so as to hold captive the balls (217) whilst allowing them to project radially outwardly of the cylindrical periphery of the body member (211) in the locking position.

A control probe (219) is slidably mounted in the bore (212) and is formed with a smaller diameter end portion (220) which is slidably received in the narrower bore (213). The probe (219) is spring-loaded in the direction outwardly of the bore (212) by a compression spring(221) provided in the bore (213). In the unlocked condition of the locking mechanism, as shown in Fig.18, the locking balls (217) are contained within the envelope defining the cylindrical periphery of the body part (211) and rest against the narrower diameter end portion(220) of the probe (219).

The free end surface on the larger diameter portion (222) of the probe is formed with a blind axial bore(223) and the portion (222) of the probe is formed with a diametrical slot (224) extending from its free end face along a major part of the length of that portion (222). A pawl (225) is rotatably mounted within the slot (224). The pawl (225) is generally oblong in shape having a pair of notches (226) formed in the opposite smaller sides of the periphery of the pawl. The rotary positions of the pawl are controlled by a spring-loaded ball (227) located in the bore(223) to act on the oblong peripheral surface of the pawl to temporarily locate the pawl in different angular positions thereof. The rotary pawl (225) provides a latching mechanism between the probe and the body member (211) as described below.

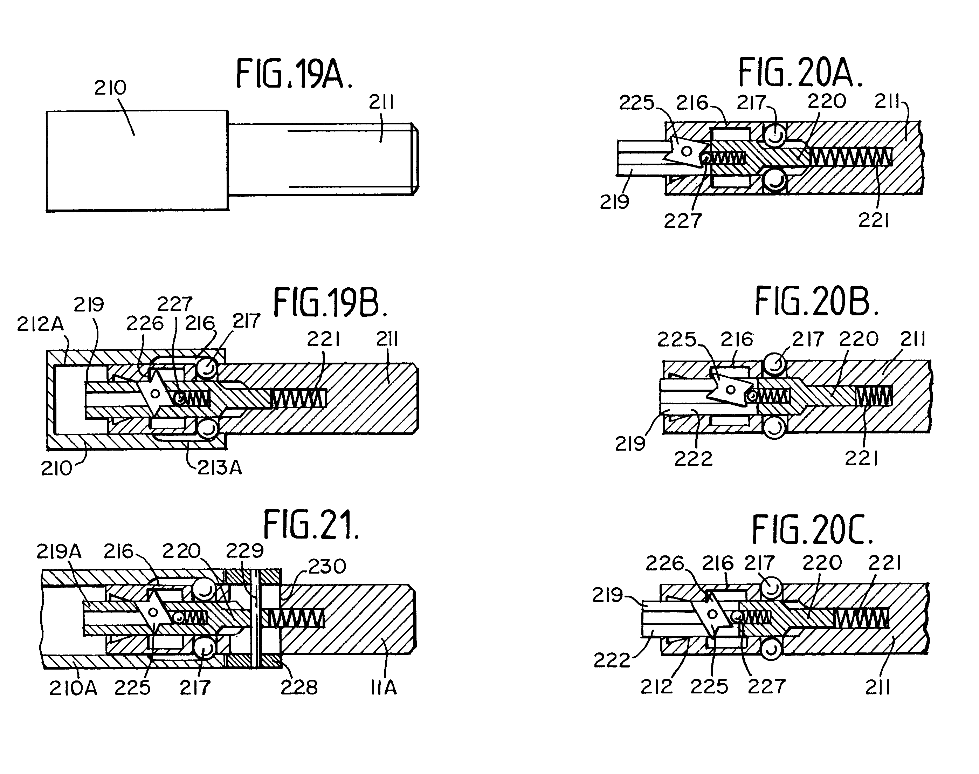

Fig. 18 illustrates an unlocked condition of the locking mechanism provided by locking balls (217). In this position, the rotary pawl (225) is located in the angular disposition thereof shown in Fig. 18 by the spring-loaded ball (227), such that it projects outwardly of the periphery of the pawl (225) to engage an abutment surface of the undercut portion (215) formed within the body member (211). This position is also illustrated diagrammatically in Fig. 20A. When the body member (211) is engaged in the socket part (210), the probe (219) engages the end wall of the cavity (212A) in the socket part and on further movement of the body member into the socket part, is displaced slidably with respect to the body part (211) until the rotary pawl (225) engages in the annular recess (216) as illustrated in Fig. 20B. When the probe (219) is in this position, it is again moved to an angular disposition under the influence of its spring control means such that it projects into the recess thereby latching with an end surface of the recess (216) thereby restricting movement of the probe (219) in the direction out of the bore (212) in the body part (211), as illustrated in Fig. 20C. In this disposition, the locking balls (217) are moved radially outwardly as they are engaged first by the frusto-conical shoulder between the smaller and larger diameter portions (220,222) of the probe to be maintained in their outward locking position, as shown in Figs. 20B and 20C, resting on the periphery of the larger diameter portion (222) of the probe (219). This locking portion is shown in Fig. 19B wherein the locking balls (217) engage in the internal recess (213A) in the socket part (210) preventing withdrawal of the body part (211) therefrom.

In this latched condition of the rotary pawl (225) on the probe (219) with the end abutment surface of the internal recess (216) on the body part (211), which corresponds to a locked condition of the locking mechanism, the spring-loaded control ball (227) then acts against one of the pair of longer surfaces of the oblong periphery of the pawl. In order to release the locking mechanism, it is necessary to unlatch the pawl (225) and this is achieved by pressing the body part (211) into the socket (210) so that on abutment of the free end surface of the probe (219) with the base of the cavity (212A) relative movement between the probe (219) and the body part (211) takes place. The probe is then moved further into the bore (212) in the body part (211) so that the notch (226) in the pawl (225) disengages from the end abutment surface of the annular recess (216) in the body part (211). With the pawl disengaged from this abutment surface, it is then free to rotate and a small rotary motion of the pawl takes place under the influence of the resilient control means (227) until the parallel longer side surfaces of the periphery of the pawl are generally perpendicular to the axis of the bore (212) in the body part. The body part can then be moved in a direction to withdraw it from the socket part (210) so that the probe is then free to be urged outwardly of the bore (212) under the influence of the spring (221) which at this stage is in a partially compressed condition. This relative outward movement of the probe (219) with respect to the body part (211) is possible as a result of the above-described new disposition of the pawl (225) such that when the pawl engages the end abutment surface of the recess (216), it does so with one of its unnotched longer side surfaces whereupon the pawl is freely rotated against the spring control means (227) to a position which is contained completely within the periphery of the probe (219) with the spring-loaded ball (227) then acting on an end notched surface of the pawl. When the probe has moved outwardly of the bore (211) to a position in which the pawl (225) is opposite the undercut end section of the bore (212), the pawl is moved outwardly of the probe (219) to engage in this undercut as shown in Fig. 20A, under the influence of the spring-loaded ball (227) which then engages in the base of the corresponding notched end of the pawl. The locking balls (217) are then opposite the smaller diameter end section (220) of the probe (219) allowing them to move inwardly of the body part (211) thereby permitting free withdrawal of the body part (211) from the socket (210).

Fig. 21 shows a construction generally similar to that described above except that body part (211A) is adapted for locking engagement in an open-ended socket part (210A). In this embodiment, actuation of the probe (219A) is effected by an external sleeve (228) slidably mounted on the body part (211A) and having a pin (229) extending through a transverse slot (230) provided through the body part (211A) to form a connection between the smaller diameter portion (220) of the probe (219) and the sleeve (228). Actuation of the probe (219), to cause latching of the pawl (225) against the end wall abutment surface of the annular recess (216), as illustrated in Fig. 21, is caused by engagement of the sleeve (228) with the end surface of the socket part (210A) on insertion of the body member (211A) therein. The latching and unlatching sequence of the pawl (225) with the end abutment surface of the recess (216) and corresponding locking and unlocking of the balls (217) within the internal annular recess in the socket (210A) is in accordance with the sequences described above in relation to Figs. 19 and 20.

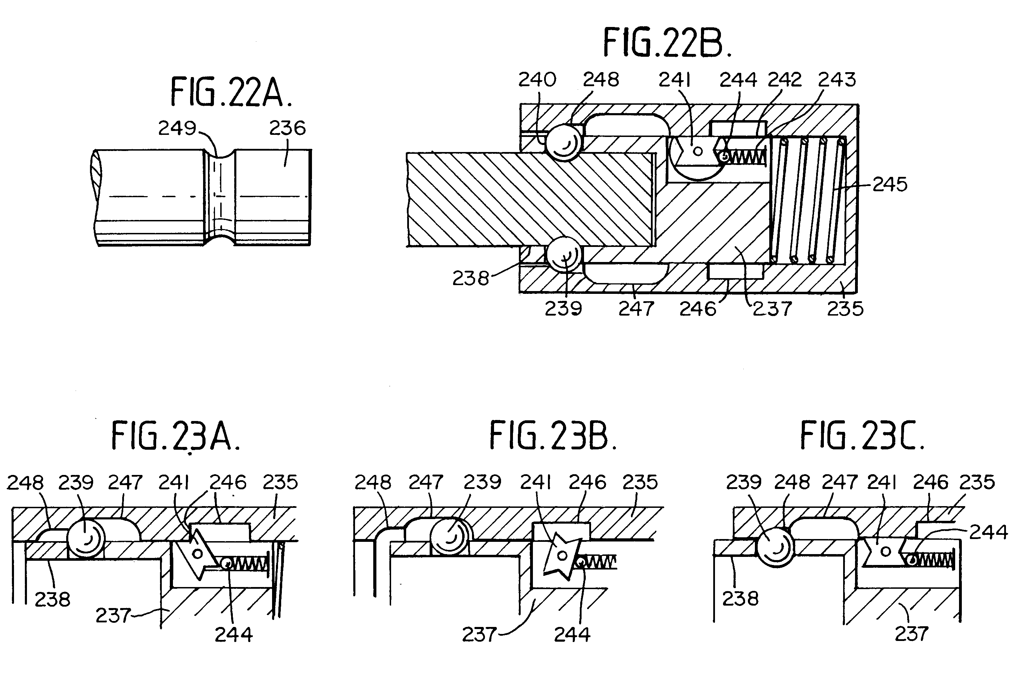

Figs. 22A and 22B illustrate an embodiment in which the locking mechanism is provided in the socket part (235) to receive and releasably lock a grooved pin (236) which can be engaged therein. The locking mechanism comprises a cylindrical cage member (237) having a cylindrical recess (238) in one end thereof to receive the grooved pin (236). The locking balls (239) are located in apertures (240) provided in the wall of the recess (238) and are shaped to allow the balls to project radially inwardly of the recess (238) in the locked condition. The rotary pawl (241) is located in a slot (242) extending from the other end of the cage body (237). A spring-loaded ball (244) for controlling the angular dispositions of the pawl (241), is provided in a bore (243) extending from the aforesaid other end of the cage body (237) along the slot (242).

The cage body (237) is located in the cavity in the socket part (235) with a compression spring (245) being provided between the base of the cavity and the opposing end surface of the cage body (237).

The cavity in the socket body (235) is formed with a first annular recess (246) providing an abutment surface at one end thereof, as in the previous embodiments, for the rotary pawl (241). The cavity is also formed with a second annular recess (247) having at one end thereof a shallower portion (248) for maintaining the locking balls (239) in a locked condition as described below.

The initial, free position of the locking mechanism is shown in Fig. 23A with the locking pawl (241) latched against the left-hand radial abutment surface of the recess (246). In this position, the cage body is held in an axial position within the socket body (235) such that the locking balls (239) are disposed at the left-hand end of the deeper portion of the annular recess (247), wherein they do not project radially inwardly of the recess (238) in the cage body (237). In this position, the grooved pin (236) can be engaged in the recess in the cage body (237) until it abuts the end wall thereof. Further movement of the pin (236) pushes the cage body (237) against the action of spring (245) to the position shown in Fig. 23B. The spring-loaded control means (244) acting on the pawl (241) rotates the pawl to the position shown in Fig. 22B once it has disengaged from the radial abutment surface of the recess (246) in the position shown in Fig. 23A. The actuating force on the pin (236) is then removed and the compression spring (245) acts on the cage body (237) to move it to the position shown in Fig. 23C. This is permitted by the re-positioning of the pawl (241) as shown in Fig. 23B so that the pawl (241) is brought to its disposition shown in Fig.23C as the cage body (237) moves in the leftward direction. In this position, the locking balls (239) are disposed in the shallower portion (248) of the recess (247) wherein they project radially inwardly of the recess (238) in the cage body (237). In this disposition, they engage in the annular groove (249) provided in the pin (236), as shown in Fig. 22B, thereby locking the pin (236) in the socket body (235). In order to release the pin (236), it is pressed into the socket body (235) so that the locking balls (239) are moved into the deeper portion of the recess (247) thereby disengaging from the groove (249) in the pin. When the locking pawl (241) is radially aligned with the recess (246) in the socket body, it is acted upon by the spring-loaded ball (244) which then rotates the pawl (241), from the position shown in Fig. 23C, in a clockwise direction until the ball (244) engages in the base of the V-shaped notch in the end surface of the pawl (241) with which it is engaged. In this position, the pawl projects into the recess (246) in such a disposition that on removal of the pin (236) accompanied by movement of the cage body (237) in the same direction under the influence of spring (245), the V-shaped notch in the opposite end of the pawl (241) receives a corner portion of the left-hand radial abutment surface of the recess (246), as shown in Fig. 23A, thereby latching the cage body (237) in that position with the locking balls (239) still within the deeper portion of the recess (247). The pin (236) can thereby be freely withdrawn from the locking mechanism and the socket body (235).

The embodiments described above comprise mechanically actuated locking mechanisms which are operated by a mechanical interaction between the two parts to be locked together and released from the locking condition.

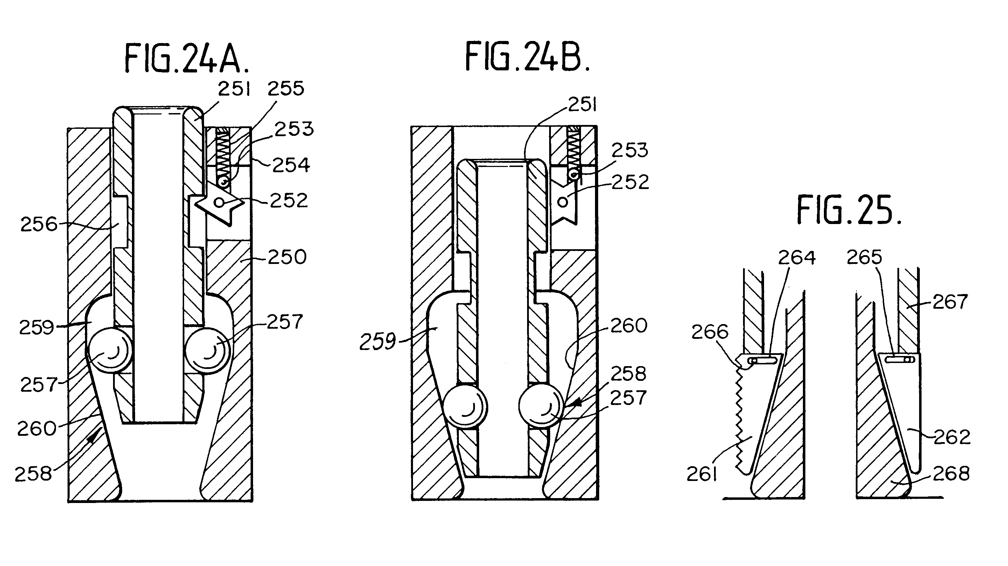

Figs. 24A and 24B illustrate a self-gripping locking mechanism for an elongate element extending through the mechanism, for example a tubular member, a cylindrical bar, a rope or a wire. The mechanism comprises an outer tubular housing (250) and an inner tubular ball cage (251) slidably located therein. A latching mechanism between the cage (251) and the housing (250) comprises a rotary pawl (252) located in a radial slot (254) provided in the wall of the housing (250), and a spring-loaded control ball (253) acting thereon and contained in a bore (255) provided in the housing wall. The pawl (252) has the same general form as that described in the previous embodiments and the spring-loaded control ball (253) angularly positions the pawl (252) during latching and unlatching sequences in accordance with those described in the previous embodiments. The cage (251) is provided with an annular recess (256) in its external surface with the upper radial end wall of the recess (256) providing an abutment surface with which the pawl (252) latches as shown in Fig. 24A.

The locking mechanism comprises locking balls (257) located in corresponding apertures through the wall of the cage (251). The positioning of the locking balls (257) is determined by an annular cam surface (258) in the internal surface of the housing at the lower end thereof. The cam surface (258) has an upper relatively deep portion (259) of a constant depth which allows the balls to take up a position in which they do not project inwardly of the inner periphery of the cage (251). The constant depth portion (259) of the cam surface (258) leads into a frusto-conical portion (260) which converges towards the lower end of the housing (250) causing the balls to move inwardly of the inner periphery of the cam (258) to a locking position when the cage (251) moves downwardly within the housing (250) to the position shown in Fig. 24B. Initially the cage (251) is latched in the upper position shown in Fig. 24A on engagement of the pawl (252) with the abutment surface provided at one end of the recess (256). In this position, the elongate member passing axially through the cage (251) and the housing (250) can be pulled freely downwards through the locking mechanism. The external side of the elongate is such that there is a frictional engagement with the internal periphery of the cage (251) when the elongate is moved therethrough. In order to effect a locking condition, the elongate member is moved in the opposite direction, namely upwardly thereby lifting the cage (251) sufficiently to allow the control ball (253) to act on the pawl (252) to rotate it to a generally horizontal condition such that on subsequent downward movement of the elongate, whereby the cage (251) is also moved downwardly under the frictional contact therewith, the upper end abutment surface of the recess (256) now contacts a longer, unnotched, side surface of the pawl (252) so that it can be freely rotated to the generally vertical disposition shown in Fig. 24B allowing free downward movement of the cage (251). As the cage (251) moves downwardly towards the position shown in Fig. 24B, the locking balls (257) are moved inwardly into a locked condition with the elongate as they move along the converging, frusto-conical portion of the cam surface (258). In order to subsequently release the locking mechanism from the elongate, the elongate is moved upwardly thereby moving the cage (251) upwardly sufficiently to allow the control ball (253) to position the pawl (252) within the recess (256) in the cage such that on downward movement of the elongate and the cage (251), the cage becomes latched with respect to the housing (250) in the condition shown in Fig. 24A.

The locking balls (257) can be replaced by other suitable locking elements, for example rollers, wedges or serrated collets.

This type of mechanism can be mechanically activated by providing mechanical means for moving the ball cage (251) with respect to the housing (250) or it can rely solely on the frictional contact between the elongate element and the ball cage (51) as described above.

Fig. 25 illustrates alternative locking members in the form of wedge members (261 and 262) having either a female threaded edge (263) for engaging in an encircling male thread or a smooth gripping edge. The wedge members are constrained to move radially by horizontal slots (264,265) therein, through which pins (266), provided on a tubular support member (267) for the wedges, project. The tubular locking cage (268) in this embodiment has an outwardly flared lower end to cooperate with the inclined inner surface of the wedge members (261,262) to force the wedge members outwardly into locking engagement with the internal surface of an encircling component on relative axial movement of the cage (268) with respect to the tubular support (267). The latching mechanism described above in relation to Figs. 24A and 24B is provided between the cage (268) and the support (267) to provide a similar locking and release action for this embodiment as described in that of Figs. 24A and 24B with the relative movement between the cage (268) and the support (267) required for such locking and release being controlled by the aforesaid latching mechanism therebetween.

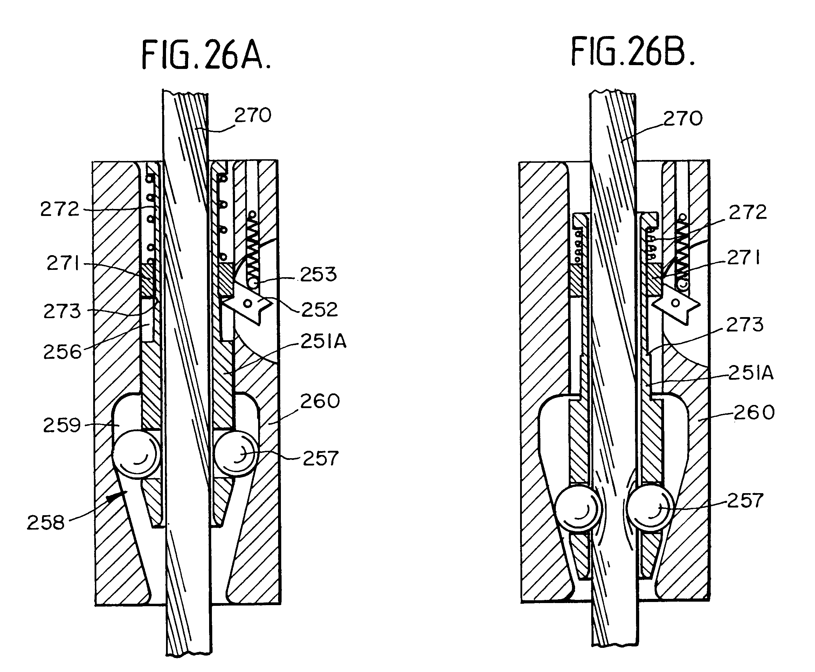

The embodiment shown in Figs. 26A and 26B is generally similar to that shown in Figs. 24A and 24B and like parts have been given similar reference numerals. The following description of this embodiment will therefore be limited to the modifications provided in the embodiment of Figs. 26A and 26B. This embodiment comprises a locking mechanism for an elongate member (270), for example a rope or a wire allowing a normal free running of the rope downwardly through the device until a rapid acceleration at a predetermined set limit, is experienced at which the device is actuated to firmly grip the rope to arrest its downward movement through the device. The tubular cage (251A) has a modified upper end whereby the upper end radial abutment surface of the annular groove (256) for cooperation with the latching pawl (252) is provided by an annular collar (271) slidably mounted on an upper end portion (272) of the cage. The collar (271) is spring-loaded against a radially stepped portion (273) of the collar(251) adjoining the annular recess (256). With the rope (270) passing downwardly through the device in its latched condition shown in Fig. 26A which corresponds with the latched condition shown in Fig. 24A, the locking device remains in its unlocked condition. However on a rapid increase in acceleration of the rope (270), for example under a snatch load, the tubular cage (251A) is frictionally entrained by the rope (270) which will move downwardly against the action of the compression spring loading the collar (271), to the locked condition shown in Fig. 26A. On release of such load, the spring bias acting on the locking collar (271) will return the locking mechanism to its unlocked condition as shown in Fig. 26A. Otherwise the locking and unlocking conditions of the device are achieved by the same action as described in connection with locking and unlocking of the device shown in Figs. 24A and 24B, required to cause latching and unlatching of the rotary pawl (252) with the locking collar (271).

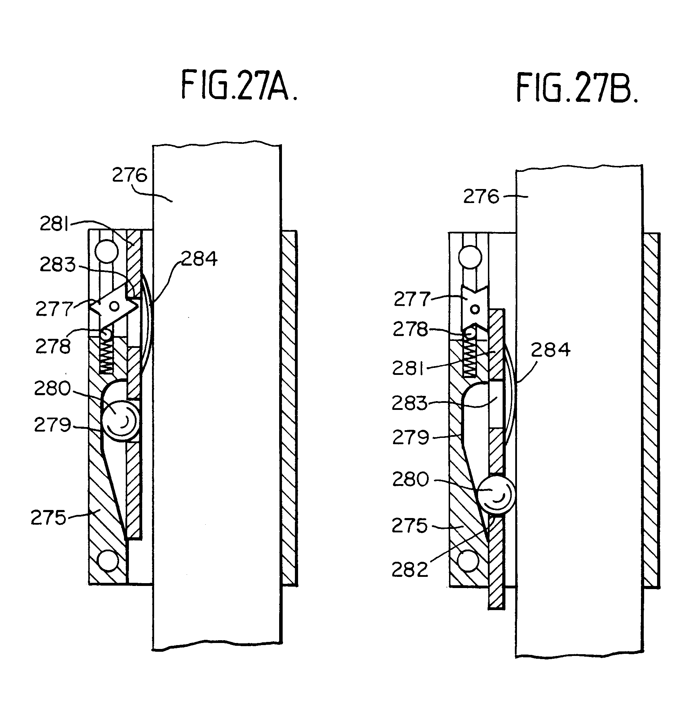

Figs. 27A and 27B show a locking mechanism for effecting a firm clamping engagement with a length of solid or tubular bar stock, for example a flat bar, a round bar, a square bar or an I-beam. The locking mechanism comprises a lock body (275) comprising a housing adapted to closely surround and generally correspond to the shape of the bar stock (276). On one side of the bar stock (276) the housing (275) contains the locking mechanism for acting against the bar stock (276). A rotary pawl (277) with a spring-loaded control ball (278) acting thereon is located in a slotted wall portion of the housing. An internal wall portion of the housing (275) below the position of the rotary pawl (277), is formed with a cam surface (279) for controlling a locking ball (280). A ball cage member (281) is located between the inner periphery of the wall of the housing (275) accommodating the latching device (277,278) and the locking mechanism (279,280) and is relatively slidable with respect to the housing (275). The cage has an aperture (282) for receiving the locking ball (280), and a further aperture (283) for receiving the latching pawl (277). An arcuate spring element (284) is located on the cage (281) to provide a frictional engagement with the bar stock (276). In the latched condition of the rotary pawl (277) in the aperture (283) of the cage as shown in Fig. 27A , free downward movement of the bar stock (276) through the locking mechanism is permissible. In order to effect locking of the bar stock, it is first moved upwardly to allow the pawl (277) to fully engage in the aperture(283) under the influence of the spring-loaded control ball (278). Subsequent downward movement of the bar stock (276) causes the corresponding downward movement of the cage (281) through the frictional engagement of spring (284) with the bar stock whereby the locking ball (280) moves along the lower inclined portion of the cam surface (279) effecting a jamming engagement with the bar stock (276) to the locked condition as illustrated in Fig. 27B. In order to release the bar stock (276) it is moved upwardly from the position shown in Fig. 27B until the rotary pawl (277) again engages in the aperture (283) in the cage under the control of the spring-loaded ball (278) whereby, on subsequent downward movement of the bar stock (276) together with the cage (281), the cage becomes latched in the position shown in Fig. 27A with a notched end portion of the pawl (277) receiving an upper edge portion of the aperture (283) in the cage (281).

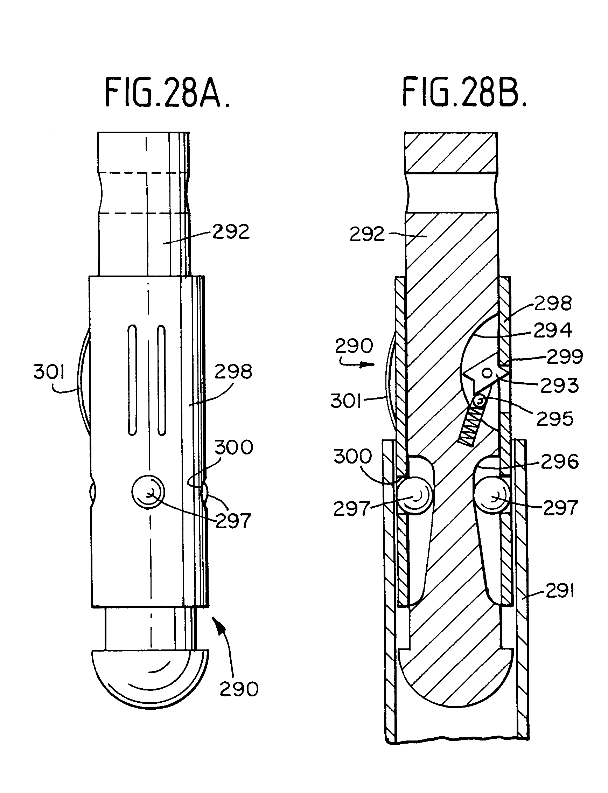

Figs. 28A and 28B illustrate an embodiment where a locking mechanism is provided on a plug-in connector member (290) to be releasably secured in a tubular member (291). The plug-in connector comprises generally cylindrical lock body (292) which carries the locking mechanism. The rotary pawl (293) is located in a cut-out portion (294) in the periphery of lock body (292) with the spring-loaded ball (295) being located in a bore formed in that cut-out portion. Below the cut-out portion (294) is formed a series of four equi-angular spaced cut-outs (296) having base surfaces formed to provide camming surfaces for the locking balls (297) disposed in those cut-outs (296), respectively. The camming surfaces have upper portions extending generally axially of the lock body (292) which merge into lower inclined ramp surfaces for thrusting the balls outwardly into locking engagement with the tube (291). An annular ball cage (298) encircles the lock body (292) and is formed with an aperture (299) for cooperating with the latching pawl (293) and four equi-angularly spaced apertures (300) for receiving respective locking balls (297). An arcuate spring strip (301) is also provided on the cage (298) to provide frictional engagement with the internal surface of the tube (291).

When the locking body (221) is plugged into the tube (291) as illustrated in Fig. 28B, frictional engagement between the spring (301) and the inner periphery of the tube (291) arrests the cage (298) within the tube (291) while the lock body (292) continues its downward movement unrestrained. This relative movement between the lock body (292) and the cage (298) allows the pawl (293) to disengage from the upper portion of the aperture (299) with which it is latched (as illustrated in Fig. 28B whereby the pawl is rotated under the influence of spring-loaded control ball (295) to a generally horizontal position within the aperture (299). Any subsequent movement to withdraw the lock body (292) from the tube (291) results in free upward movement of the lock body within the cage (298) as a result of unlatching of the pawl (293) therewith whereby the locking balls (297) are brought into locking engagement with the inner periphery of the tube (291) by the lower inclined ramp portions of the camming surfaces of the corresponding cut-out portions (296) in which they are located. Thus a firm locking of the lock body (292) in the tube (291) is effected. In order to release the lock body (292) from the tube (291), it is necessary to move the lock body (292) in the opposite direction further into the tube (291) to engage once more the rotary pawl (293) in the aperture (299) in the cage wherein it is set in an angular position by the spring-loaded control ball (295) such that it will latch with the upper edge of the aperture (299) (as illustrated in Fig. 28B on subsequent upward movement of the lock body (292). In this latched condition, the locking balls (297) bear against the upper axial portions of the camming surfaces of the cut-outs (296) so that they are out of locking engagement with the inner periphery of the tube (291). In this condition, the lock body (292) can be freely withdrawn from the tube (291). One possible application of this device would be for a scaffolding system allowing simple reliable locking together of the tubular sections thereof.

In all the above embodiments, the locking balls may be replaced by other suitable locking elements, for example locking rollers or locking wedge members or serrated collets.

The above described embodiments are merely illustrative of a wide range of different types of locking, coupling or support devices which can incorporate a locking mechanism in accordance with the invention. For example each of the constructions described in British Patent 2,140,495 could be adapted to employ a locking mechanism in accordance with the present invention.

Advantages of locking mechanisms embodying the invention include the following. The strength of the lock is not reliant on the pawl itself. The pawl merely effects a latching of a control member which actuates the locking mechanism whereby a relatively simple pawl mechanism can be utilized for a wide variety of load applications with the strength of the locking device being taken by the locking members and not the pawl. The simple pawl latching device can therefore operate the locking mechanism in applications where the applied load is several tons weight. The locking mechanism has the ability to lock on a wide variety of different elements such as tubular members, ropes, flat bar stock, beams of different shaped cross-sections, round bar stock and square bar stock. The mechanism can also be adapted to include a speed control mechanism of different sensitivities. Moreover locking mechanisms in accordance with the invention can more readily provide an evenly balanced seating around the cooperating peripheries of the components to be locked together.

The following are some examples or possible applications of locking mechanisms in accordance with the invention:-
running of drill strings, valve operations (particularly hand wheels), domestic taps, lock bolts (mechanical or concrete), dead-mans operation of hoist, jacks, screw actuators, security locks (secondary and tertiary dead-locks), robotics, miniaturized applications such as wrist-watch straps, belts, drives and clutches, drives and tow-hitches, electrical switches and plug gear, self-erecting scaffolding and storage and warehousing applications.

Referring now to Figs. 13 to 20 of the drawings, there is shown examples of apparatus embodying a locking mechanism in accordance with the invention which is specifically adapted for providing a readily releasable plug-in connection means associated with an end attachment of a security lanyard connected to a safety harness or safety belt for releasably securing the wearer to a fixed structure. The plug-in unit is received in a socket part which is recessed into a fixed structure, for example a building wall. In prior art systems, for example for securing window cleaners to strong points provided on the interior surface of a wall adjacent the window, an unsightly projecting eyebolt is secured to the wall to which an end connector element of a safety harness lanyard can be secured. Similar eyebolt supporting points have been provided on the exterior surface of building walls for securing workmen who may for example be climbing ladders or moving around on scaffolding placed against the exterior wall. A system in accordance with the invention which uses recessed tubular receptor elements obviates the need for the above-mentioned unsightly projecting eyebolt for security attachment points.

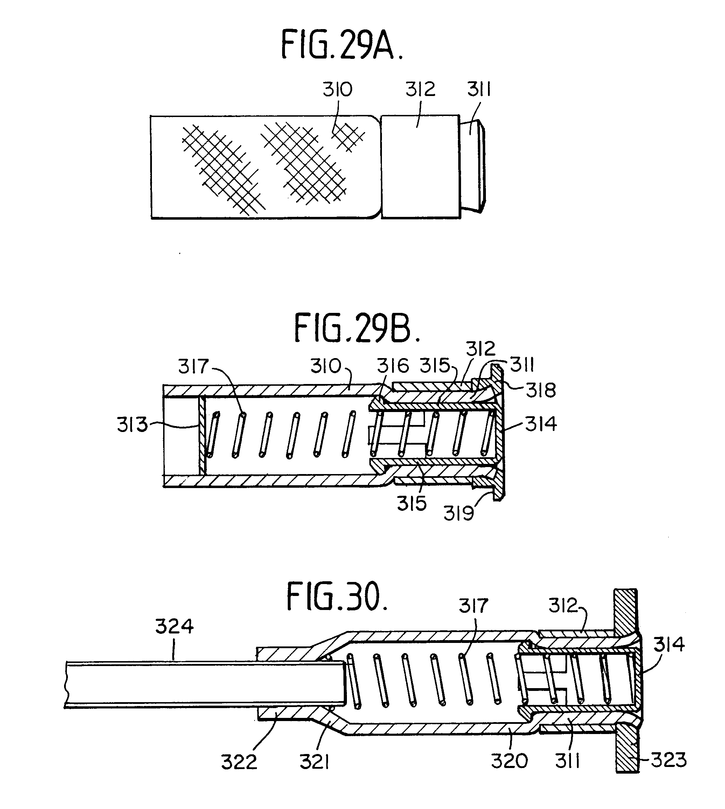

Figs. 29, 30 and 31 illustrate different constructions of receptor sockets for fixedly locating in a wall or partition member. The receptor socket of Fig. 29 is intended to be resin bonded within a cylindrical aperture formed in the wall structure. The socket comprises tubular metal part 310 formed with a reduced diameter entry neck portion 11 which is flared outwardly at its free end. A reinforcing collar 312 is located around the neck portion 311 and is either a press fit thereon, or swaged or spot welded thereon. The outer peripheral surface of the main body portion 310 of the socket has a knurled finish, as illustrated in Fig. 29A, to assist in resin bonding thereon within the wall aperture. An end wall 313 is provided within the larger diameter section of the tubular socket 310 spaced inwardly of the left-hand end thereof. The end wall 313 may be provided by a plastics cap or a blank washer crimped within the tubular socket. A cup-shaped slider 314 is provided within the socket part 310 and is dimensioned to slidably fit within the neck portion 311 thereof. The slider 314 has four equally spaced, axially projecting legs 315 with outwardly projecting barbs 316 at the free ends thereof for engaging the internal shoulder formed within the socket part 310 between the main body portion thereof and the neck portion thereof. With this construction the cup-shaped element 314 can be snap-fitted into the neck portion 311 of the socket part 310. A compression spring 317 acts between the end wall 313 closing the main body part of the socket 310, and the end wall of the cup-shaped slider 314.

An annular plastics cap 318 is snap-fitted over the outwardly swaged end of the neck portion 311 and provides an outwardly projecting annular abutment surface 319 for engagement with a surface surrounding the aperture in the wall into which the socket part is fixed in use.

Fig. 30 illustrates a construction of receptor socket part similar to that shown in Fig. 29, but adapted for use in a variety of different wall constructions. The description of this embodiment will be restricted to the differences between the two receptor socket constructions. The main body part of the receptor socket 320 at its end opposite from neck portion 311, comprises a frusto-conical portion 321 which converges inwardly to connect with an internally threaded smaller diameter tubular end section 322. Compression spring 317 acts between the internal surface of the frusto-conical portion 321 and the cup-shaped slider 314. The plastics end cap 318 of the Fig. 29 embodiment is replaced by an annular washer 323. This receptor socket may be resin bonded in an aperture in a solid wall or it may be retained by a threaded tensioning element 324 which engages in the threaded end portion 322 of the socket 320 with threaded retaining elements cooperating with the opposite end of the tensioning member 324 for engaging against an abutment surface through which the member 324 passes. If a tensioning element 324 is not provided, a plastics plug (not shown) can be fitted into the open end of threaded tubular portion 322 of the socket 320.

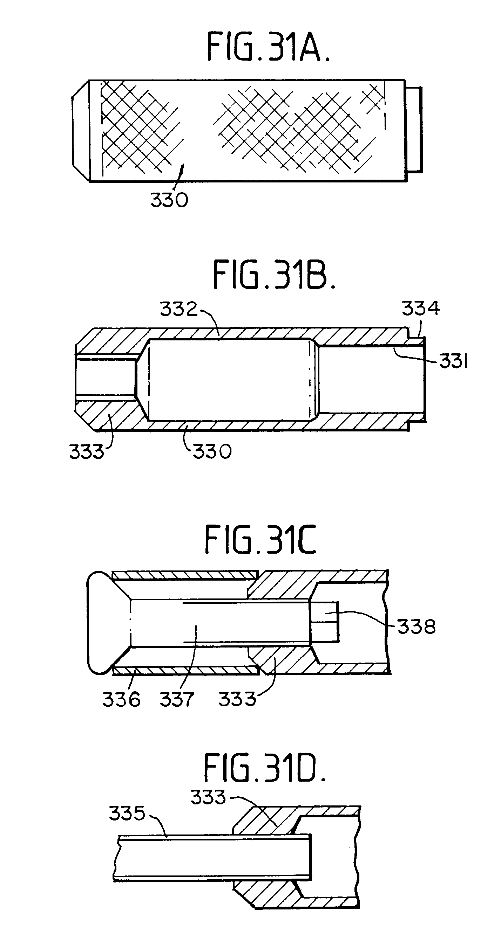

The receptor socket 330 illustrated in Fig. 31 is a part machined from a cylindrical bar stock. The outer surface of the bar is formed with a knurled finish. The bar stock is axially bored to have an initial neck section 331 which opens into a larger diameter central internal portion 332 which in turn converges into a threaded smaller diameter opposite end portion 333. The outer periphery of the bar is machined at the right-hand end thereof to form an annular step 334 on which an outwardly projecting washer can be located and swaged thereon similar to the washer 323 of the Fig. 14 construction.

As shown in Fig. 31D, the receptor socket 330 may be retained in a solid or cavity wall using a threaded stud 335 which engages within the internally threaded end portion 333 of the inner periphery of the socket 330. Fig. 31C illustrates a fixing system comprising an expansion collar 336 located between oppositely converging surfaces on the head portion of a threaded tightening element 337 and on the end surface of the socket part 330, respectively. The tightening element 337 gas an hexagonal end portion 338 to enable the member 337 to be screwed into the threaded end 333 of the socket 330 thereby effecting expansion of the collar 337 to firmly grip against the wall of the surrounding aperture.

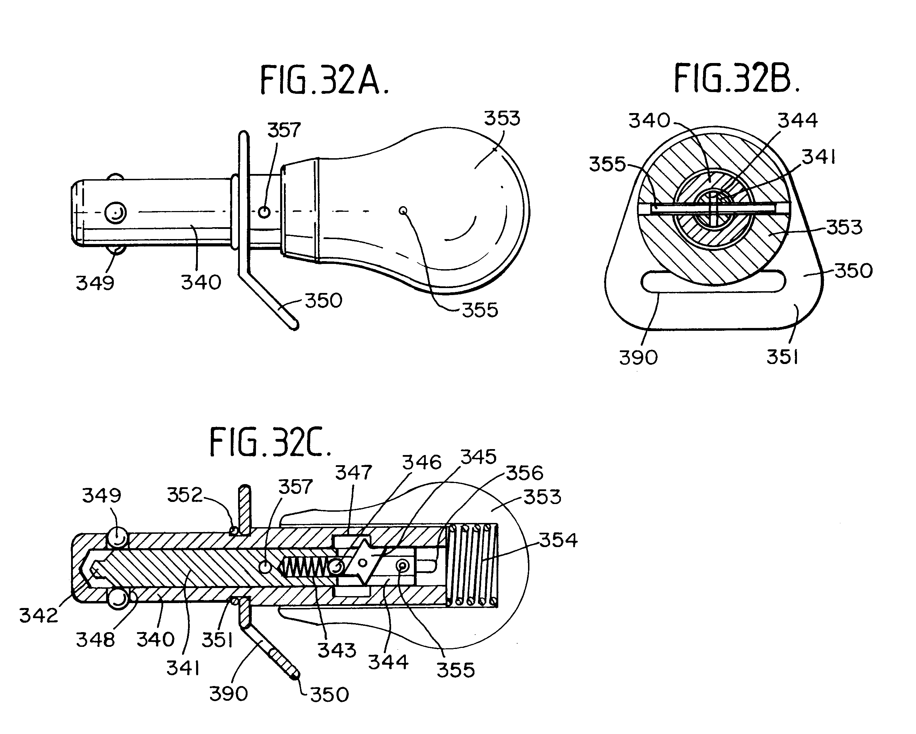

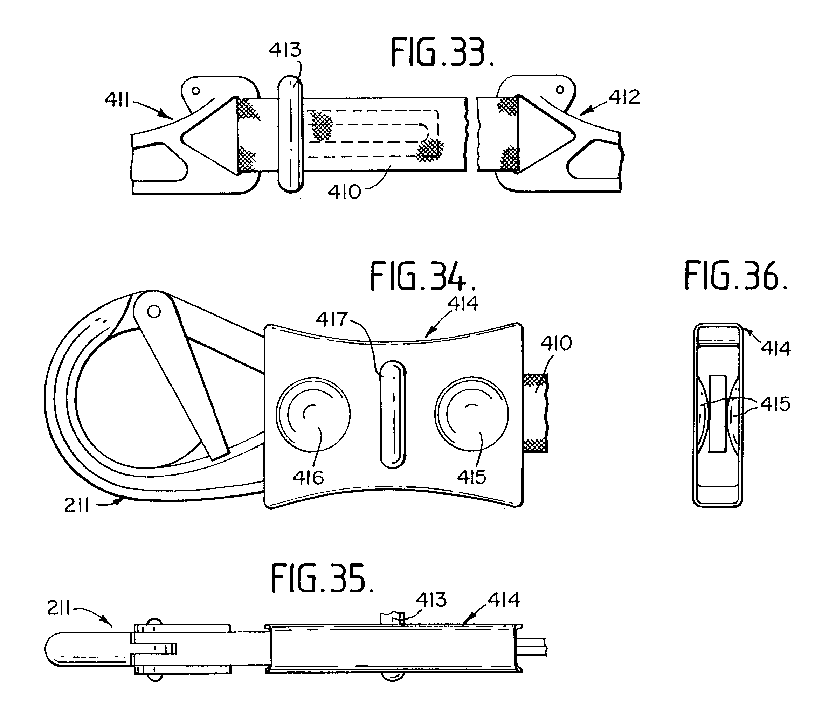

Fig. 32 illustrates a plug-in locking device for releasably engaging in a recessed socket part as shown in any of Figs. 29 to 31. The locking device comprises a probe like member 340 having an axial bore which is closed at the forward end of the probe. Located within the bore of the probe 340 is a cylindrical locking control member 341 having a reduced diameter forward end portion 342. The opposite end of the control member 341 is formed with a blind bore 343 which is intersected part-way along its length by a diametrical slot 344 extending from the rear end of the control member 341 along the axial direction thereof. A rotary control pawl 345, similar to the rotary pawls in the previously described embodiments of the invention, is located within the diametrical slot 344 and the rotary position thereof is controlled by a spring-loaded ball 346 also in accordance with the previous embodiments. An annular recess 347 is formed in the internal surface of the probe 340 to cooperate with notched end surfaces of the pawl 345 in the latched condition thereof, again in accordance with the operation of the previously described embodiments. Four equi-angularly spaced bores 348 are formed through the wall of the probe 340 adjacent the forward end thereof to receive and locate locking balls 349, once again in accordance with previous embodiments. When the balls are in contact with the main body portion of the control member 341 they are maintained in their outwardly projecting locking position whereas when the control member is moved so that the reduced diameter end portion 342 of the control member is radially aligned with the balls, then the balls can be moved inwardly of the probe to allow release thereof. An apertured flange ring 350 is located in an external annular groove 351 is located on the outer periphery of the probe body 340 by a snap ring 352. The apertured flange ring 350 shown in Fig. 32 is formed with a slot 390 to accommodate a short length of lanyard which might be sewn to provide an aperture to engage the safety hook arrangement described below in relation to Figs. 33 to 36.

A bulb-shaped actuator member 353 having an axial bore, is slidably mounted on the rear end portion of the probe 340 with a compression spring 354 acting therebetween. The actuator member 353 is retained on the probe 340 by a pin 355 engaging in diametrically opposed apertures formed in the wall of the actuator member 353 and passing through slots 356 formed in diametrically opposed portions of the wall of the probe 340 to engage in transverse apertures formed in the side walls of the control member 341 such that the actuator 353 and the control member 341 move together as a unit.

In order to permit the insertion of the plug-in locking device in a receptor socket of the types illustrated in Figs. 29 to 31, the actuator 353 is moved relative to the probe 340 against the action of compression spring 354 in order to achieve release of the rotary latching pawl 345 from the latched condition thereof shown in Fig. 32C whereby subsequent release of the actuating mechanism 353 allows free movement under the action of compression spring 354 together with the control member 341 in a direction to the right as shown in Fig. 32C relative to the probe body 340 such that the reduced diameter tip portion 342 of the control member is in transverse alignment with locking balls 349 allowing them to move inwardly of the probe body during the insertion step. The latching and unlatching sequence of the latching pawl 345 under the control of spring-loaded ball 346 is in accordance with the latching and unlatching sequences of the rotary pawls described in the previous embodiments of locking mechanisms in accordance with the invention.

During the insertion step the spring-loaded cup-shaped member 314 is moved within the larger diameter portion of the body of the receptor socket 310 against the action of compression spring 317, on engagement therewith by the inner surface of the probe body 340. When the probe body 340 has been inserted sufficiently with the locking balls 349 to be within the larger diameter internal cavity of the receptor socket 310, the actuator member 353 is again moved relative to the probe body 340 against the action of compression spring 354 so that the latching mechanism, e.g. latching pawl 345 is brought to its latched condition shown in Fig. 32C whereby the locking balls 349 are maintained in the outwardly projecting locking position in which they engage against the internal step between the larger diameter central portion of the internal cavity of the receptor body 310, and the narrower diameter neck portion 311 thereof, thereby preventing withdrawal of the probe 340 from the receptor socket. For increased security in this locking condition, transverse aligned bores 357 are formed through the wall of the body part 340 and through a solid section of the probe 340. These bores are aligned when the control member 341 is in the locking position shown in Fig. 32C. A suitable locking member can then be inserted through these aligned apertures, if desired, in order to positively maintain the device in the locked condition to provide extra security when the device is plugged in a receptor socket.

In order to disengage the locking device, the actuator member 353 is again manually moved in the leftward direction as seen in Fig. 32C with respect to the probe body 340, against the action of spring 354, in order to release the latching pawl 345 from its latched condition allowing on subsequent rightward movement of the actuator 353 and the control member 341, the locking balls 349 to be moved to their unlocked condition in which they engage the smaller diameter end portion 342 of the probe 341. Locking device 340 can then be withdrawn from the receptor socket. The spring rate of compression spring 354 is greater than the spring rate of the compression spring 317 in the receptor socket in order to prevent accidental release of the locking mechanism when inserted in the receptor socket on an accidental contact with the actuator member 353, for example by a swinging window frame.

A double-ended safety lanyard or other attachment line 410 as described in British Patent 2,133,969 may be used in connection with a locking device as shown in Fig. 32. The lanyard 410 has secured to each of its free ends, a safety hook connector 411,412. The lanyard passes through an eyelet, e.g. a D-ring, shackle or hook 413 connected to a safety harness or a safety belt, the relative dimensions of the eyelet 413, the lanyard 410 and the hooks 411 and 412 being such that the lanyard can run freely through the eyelet 413 but the hooks 411 and 412 will not pass through the eyelet.

A hook grip 414 as illustrated in Figs. 34 to 36, comprises a moulded plastics housing having centrally located slots 417 in its opposite walls to receive the eyelet 413. Opposite end sections of the housing 414 can receive and retain end portions of respective hook connectors 411 and 412 by means of pairs of inwardly extending depressions 415,416 formed in the side walls of the housing 414 adjacent respective opposite ends thereof.

Each safety hook 411 and 412 may be connected to the apertured flange 350 of a locking mechanism as shown in Fig. 32 so that the wearer can plug in to a series of recessed receptor sockets at different positions in a wall as he moves across the wall without even temporarily being released from a security detachment therewith. A first locking mechanism associated with one hook connector 411,412 is plugged in to a selected conveniently located receptor socket. When it is desired to move to a new location, a locking mechanism associated with the other connector hook at the opposite end of the lanyard 410 is plugged in to another conveniently located receptor socket before removal of the locking mechanism from the first receptor socket. Once the second connection has been securely made, then the first connection can be released to be used subsequently for a plug-in connection to a further connector socket before release of the locking device at the opposite end of the lanyard.

## Claims

1. A releasable gripping or locking device comprising a body part (10) for sliding cooperation with another part (17) to be releasably gripped or locked with respect to the body part, and interengageable latching means (22,26;28) which are actuated by relative movements of cooperating components (21,23) thereof, said latching means being adapted to be automatically engaged in a latched condition when the latching means are in a first condition and the components are first moved relative to one another in a first direction by a predetermined amount so as to restrict subsequent relative movement in the opposite direction, and are brought automatically into an unlatched condition on a predetermined amount of relative movement from the latched condition in said first direction allowing subsequent free relative movement of the components in said opposite direction, said latching means then being automatically returned to said first condition on relative movement of the components beyond a predetermined amount in said opposite direction, characterized by gripping or locking means (12;40;21C;68) movably mounted on the body part (10) for movement between a free condition, and a gripping or locking condition in which loading applied to the device is borne by said gripping or locking means, and control means (20) for controlling movement of said gripping or locking means between said free condition and said gripping or locking condition, said control means including said latching means (22,26;28) comprising said relatively movable latching components (21,23), wherein said free, and gripping or locking conditions of said gripping or locking means correspond with said latched and unlatched conditions, or vice versa, of said latching means.

2. A locking device for a releasable locking, coupling or support device having relatively slidable parts to be releasably locked against relative movement in one direction, said device comprising a pair of cooperating, relatively slidable components (211,219), and comprising interengageable latching means (215;225) acting between said components (211,219) which latching means are actuated by relative movements of said components (211,219), said latching means being adapted to be automatically engaged in a latched condition when the latching means are in a first condition and the components are first moved relative to one another in a first direction by a predetermined amount so as to restrict subsequent relative movement in the opposite direction, and are brought automatically into an unlatched condition on a predetermined amount of relative movement from the latched condition in said first direction, allowing subsequent free relative movement of the components in said opposite direction, said latching means then being automatically returned to said first condition on relative movement of the components beyond a predetermined amount in said opposite direction, characterized by gripping or locking means (217;239;257;280;297;349) movably mounted on one of said components (211) for movement with said component in a direction generally transverse to the direction of relative sliding movement of the components (211,219) between locked and unlocked conditions of said gripping or locking means corresponding to latched and unlatched, or vice versa, conditions of said latching means (215;225).

3. A device according to Claim 1 or 2, wherein said latching means comprise an abutment (22,26) on one (23) of the components and a rotary pawl (28) mounted on the other component (21) for rotation between positions in which it does and does not cooperate with said abutment on relative movement of the components and positioning means for positioning the pawl in a series of angular positions thereof during a latching or release sequence of said latching means, said pawl being rotatable through complete revolutions thereof, said positioning means comprising resilient means (31,32) provided on said other component (21) and engaged with the periphery of the pawl or a part associated therewith to temporarily locate the pawl in said angular positions during said latching and release sequences.

4. A device according to Claim 3 wherein said peripheral portion has a generally parallelogram shape whereby said resilient means (31,32) engage in succession each side of the parallelogram-shaped peripheral portion associated with the pawl (28) as the pawl is rotated by engagement with and disengagement from said abutment so as to rotate and locate the pawl in the required angular position for the next step in a locking or release sequence, said pawl having a pair of opposed peripheral edges which are formed with recesses or notches (29) to receive a corner portion of said abutment in the latched condition of the latching means.

5. A device according to Claim 1 wherein said gripping means comprise a cam (12) pivotally mounted on said body part (10) and having a curved gripping surface (13) shaped to cooperate with an opposed portion of the body part so as to narrow the gap therebetween on rotation of the cam in one direction so as to grip an elongate member (17) extending in use therebetween.

6. A device according to Claim 5 including pivotal mounting means (15) for the cam (12) which are slidably mounted on the body part (10) for movement towards and away from said portion of the body part to facilitate threading of an elongate member (17) through the device and to accommodate elongate members of different cross-sectional sizes, resilient means (16) being provided to bias said pivotal mounting means towards said portion of the body part.

7. A device according to Claim 6 wherein said cam (12) acts on an elongate member (17) engaged in use with the device, through a pressure bar (40) interlinked with the cam (12A) and acted on by said curved gripping surface.

8. A device according to Claim 1 wherein said gripping means comprise a pressure bar (40) movable towards and away from an opposed portion of the body part (10) in a generally parallel relationship thereto by a pivotal linkage (43,44) between the pressure bar (40) and the body part (10).

9. A device according to Claim 8 wherein the pressure bar (40) is movably mounted on the linkage towards and away from said opposed portion of the body part to facilitate threading of an elongate member (17) through the device and to accommodate elongate members of different cross-sectional sizes, the pressure bar (40) being resiliently biassed towards said opposed portion of the body part (10).

10. A device according to Claim 5 or Claim 8, wherein said relatively slidable components of said control means are in the form of a telescopic strut (20) pivotally mounted at one end thereof on the body part and at the other end thereof on said cam (12) or said linkage (44) to control the pivotal movement thereof.

11. A device according to Claim 5 wherein said latching means (28) of said control means acts directly between said cam (12B) and said body part (20B).

12. A device according to Claim 5 wherein a pair of said cams (12B) are pivotally mounted on said body part (55) in an opposed relationship such that pivoting of the cams to their gripping positions progressively narrows the gap between the gripping surfaces of the cams thereby effective a positive gripping of an elongate member (17A) extending, in use, therebetween.

13. A device according to Claim 1 wherein said locking means comprise a locking member (21C) slidably mounted in a casing (23C) mounted on the body part with said control means acting between said locking member and said casing, said body part being in the form of a tubular housing (61) for slidably receiving a shuttle member (60) with said locking member projecting into the housing to engage the periphery of the shuttle member which has a peripheral recess (62) formed to receive said locking member in the locking condition of said locking means and to cause said locking means to be brought into its free and locking conditions in accordance with sliding movements of the shuttle member in the housing.

14. A device according to Claim 1 wherein said body part comprises a tubular housing (67) for receiving a shuttle part (65) having an engagement portion sliding disposed in the housing, said locking means comprising a toggle member (68) having a cross-piece (69) pivotally mounted with respect to the housing, one end portion of which can extend into the housing through an aperture in the wall thereof on rotation of the toggle member in one direction, and a leg portion (70) depending from the cross-piece and having an end portion which can extend into the housing through an aperture in the wall thereof on rotation of the toggle member in the other direction, and said slidable components of said control means being in the form of a telescopic strut (20D) pivotally mounted at one end thereof with respect to the housing and at the other end thereof on the other end portion of the cross-piece (69) of the toggle member (68), whereby sequential sliding movements of the shuttle part in the housing in opposite directions cause opposite ends of said engagement portion thereof to engage said cross-piece and leg of the toggle member in turn causing sequential free and locking conditions thereof under the control of said control means.

15. A device according to Claim 2 wherein said locking means comprise at least one locking member (257) provided on one of the components (251) for movement generally transverse to said relative sliding direction of the components and cam means (258) provided on the other of the components (250) adapted to act on the locking member and to maintain it in a locked position thereof and to permit the locking member to move to an unlocked position thereof in accordance with relative sliding movement of the components between positions in which said latching means (252,256) are in a latched or unlatched condition, or vice versa.

16. A device according to Claim 2 in the form of a plug-in attachment device (290) in combination with a receptor socket part (291) for recessing in a wall structure into which the attachment device may be releasably secured in use.

17. A system comprising the combination of Claim 16 further including a safety harness or safety belt attachment system and a safety line or lanyard (410) for connection to the safety harness or belt and having an end connector (411) for attachment to the plug-in attachment device.

18. A system according to Claim 17 wherein a plurality of receptor sockets (291) are provided for location at spaced positions in a wall structure.

19. A system according to Claim 18 wherein said safety line or lanyard (410) has end connectors (411,412) at respective opposite ends thereof for attachment to respective plug-in attachment devices (290).

20. A system according to Claim 19 wherein the safety line or lanyard passes through an eyelet (417) on the safety harness or belt which does not permit passage of either end connector (411,412) thereof.

## Patentansprüche

1. Freigebbare Klemm- oder Verriegelungsvorrichtung, die ein Körperteil (10) zum gleitenden Zusammenwirken mit einem anderen Teil (17), das gegenüber dem Körperteil freigebbar zu klemmen oder zu verriegeln ist, und ineinandergreifbare Rastmittel (22, 26; 28) enthält, die durch Relativbewegungen von zusammenwirkenden Komponenten (21, 23) davon betätigt werden, wobei die Rastmittel dafür geeignet sind, automatisch in einem eingerasteten Zustand in Eingriff gebracht zu werden, wenn sich die Rastmittel in einem ersten Zustand befinden und die Komponenten zunächst relativ zueinander um einen vorbestimmten Betrag in eine erste Richtung bewegt werden, um eine anschließende Relativbewegung in die entgegengesetzte Richtung zu beschränken, und werden bei einem vorbestimmten Betrag an Relativbewegung aus dem eingerasteten Zustand in die erste Richtung, wodurch eine anschließende freie Relativbewegung der Komponenten in die entgegengesetzte Richtung gestattet wird, automatisch in einen nicht eingerasteten Zustand gebracht, wobei die Rastmittel dann bei Relativbewegung der Komponenten über einen vorbestimmten Betrag in die entgegengesetzte Richtung hinaus automatisch in den ersten Zustand zurückgebracht werden, gekennzeichnet durch Klemm- oder Verriegelungsmittel (12; 40; 21C; 68), die zur Bewegung zwischen einem freien Zustand und einem Klemm- oder Verriegelungszustand, in dem auf die Vorrichtung ausgeübte Belastung von den Klemm- oder Verriegelungsmitteln getragen wird, beweglich am Körperteil (10) befestigt sind, und Steuermittel (20) zur Steuerung der Bewegung der Klemm- oder Verriegelungsmittel zwischen dem freien Zustand und dem Klemm- oder Verriegelungszustand, wobei die Steuermittel die Rastmittel (22, 26; 28) enthalten, die die Rastkomponenten (21, 23), welche die Relativbewegungen ausführen können, aufweisen und die freien und Klemm- oder Verriegelungszustände der Klemm- oder Verriegelungsmittel den eingerasteten und nicht eingerasteten Zuständen oder umgekehrt der Rastmittel entsprechen.

2. Verriegelungsvorrichtung für eine freigebbare Verriegelungs-, Koppel- oder Stützvorrichtung mit Teilen, die eine relative Gleitbewegung ausführen können, so daß sie gegen Relativbewegung in eine Richtung freigebbar verriegelt sind, wobei die Vorrichtung ein Paar zusammenwirkender Komponenten (211, 219), die eine relative Gleitbewegung ausführen können, und zwischen den Komponenten (211, 219) wirkende ineinandergreifbare Rastmittel (215; 225) enthält, die von Relativbewegungen der Komponenten (211, 219) betätigt werden, wobei die Rastmittel dafür geeignet sind, in einem eingerasteten Zustand automatisch in Eingriff gebracht zu werden, wenn sich die Rastmittel in einem ersten Zustand befinden und die Komponenten zunächst relativ zueinander um einen vorbestimmten Betrag in eine erste Richtung bewegt werden, um eine anschließende Relativbewegung in die entgegengesetzte Richtung zu beschränken, und werden bei einem vorbestimmten Betrag an Relativbewegung aus dem eingerasteten Zustand in die erste Richtung, wodurch eine anschließende freie Relativbewegung der Komponenten in die entgegengesetzte Richtung gestattet wird, automatisch in einen nicht eingerasteten Zustand gebracht, wobei die Rastmittel dann bei Relativbewegung der Komponenten über einen vorbestimmten Betrag in die entgegengesetzte Richtung hinaus automatisch in den ersten Zustand zurückgebracht werden, gekennzeichnet durch Klemm- oder Verriegelungsmittel (217; 239; 257; 280; 297; 349), die zur Bewegung mit einer der Komponenten (211) in eine Richtung, die allgemein quer zur Richtung der relativen Gleitbewegung der Komponenten (211, 219) zwischen verriegelten und nicht verriegelten Zuständen der Klemm- oder Verriegelungsmittel liegt, die den eingerasteten und nicht eingerasteten Zuständen oder umgekehrt der Rastmittel (215; 225) entsprechen, an jener Komponente beweglich befestigt ist.

3. Vorrichtung nach Anspruch 1 oder 2, bei der die Rastmittel folgendes enthalten: eine Stoßfläche (22, 26) an einer (23) der Komponenten und eine an der anderen Komponente (21) befestigte Drehklinke (28) zur Drehung zwischen Positionen, in denen sie bei Relativbewegung der Komponenten mit der Stoßfläche zusammenwirkt oder nicht mit ihr zusammenwirkt, sowie Positioniermittel zum Positionieren der Klinke in einer Reihe von Winkelpositionen davon während einer Rast- oder Freigabefolge der Rastmittel, wobei die Klinke über ganze Umdrehungen hindurch drehbar ist und die Positioniermittel elastische Mittel (31, 32) umfassen, die an der anderen Komponente (21) vorgesehen sind und mit dem Umfang der Klinke oder einem ihr zugeordneten Teil in Eingriff stehen, um die Klinke während der Rast- und Freigabefolgen vorübergehend in den Winkelpositionen zu positionieren.

4. Vorrichtung nach Anspruch 3, bei der der Umfangsteil allgemein parallelogrammförmig ist, wobei die elastischen Mittel (31, 32) nacheinander jede Seite des parallelogrammförmigen Umfangsteils in Eingriff nehmen, der der Klinke (28) zugeordnet ist, wenn die Klinke durch Eingriff mit der Stoßfläche oder Außereingriffbringen damit gedreht wird, so daß die Klinke für den nächsten Schritt in einer Verriegelungs- oder Freigabefolge in die erforderliche Winkelposition gedreht und positioniert wird, wobei die Klinke ein Paar gegenüberliegender Umfangsränder aufweist, die zur Aufnahme eines Eckteils der Stoßfläche im eingerasteten Zustand der Rastmittel mit Aussparungen oder Kerben (29) ausgebildet sind.

5. Vorrichtung nach Anspruch 1, bei der die Klemmmittel einen Nocken (12) enthalten, der schwenkbar am Körperteil (10) befestigt ist und eine gekrümmte Klemmfläche (13) aufweist, die zum Zusammenwirken mit einem gegenüberliegenden Teil des Körperteils gestaltet ist, um bei Drehung des Nockens in eine Richtung die Lücke dazwischen zu verengen, um ein sich im Gebrauch dazwischen erstreckendes längliches Glied (17) einzuklemmen.

6. Vorrichtung nach Anspruch 5, die schwenkbare Befestigungsmittel (15) für den Nocken (12) aufweist, die zur Ausführung einer Bewegung zum Teil des Körperteils hin und davon weg gleitbar am Körperteil (10) befestigt sind, um das Einführen des länglichen Glieds (17) durch die Vorrichtung zu vereinfachen und längliche Glieder mit unterschiedlichen Querschnittsgrößen aufzunehmen, wobei zur Vorspannung der schwenkbaren Befestigungsmittel in Richtung des Teils des Körperteils elastische Mittel (16) vorgesehen sind.

7. Vorrichtung nach Anspruch 6, bei der der Nocken (12) über einen Druckstab (40), der mit dem Nocken (12A) verbunden ist und auf den die gekrümmten Klemmfläche einwirkt, auf ein im Gebrauch mit der Vorrichtung in Eingriff stehendes längliches Glied (17) einwirkt.

8. Vorrichtung nach Anspruch 1, bei der die Klemmmittel einen Druckstab (40) aufweisen, der über ein Schwenkgestänge (43, 44) zwischen dem Druckstab (40) und dem Körperteil (10) in allgemein paralleler Beziehung zu einem gegenüberliegenden Teil des Körperteils (10) hin oder davon weg beweglich ist.

9. Vorrichtung nach Anspruch 8, bei der der Druckstab (40) zum gegenüberliegenden Teil des Körperteils hin und davon weg bewegbar am Gestänge befestigt ist, um das Einführen eines länglichen Glieds (17) durch die Vorrichtung zu erleichtern und längliche Glieder mit unterschiedlichen Querschnittsgrößen aufzunehmen, wobei der Druckstab (40) in Richtung des gegenüberliegenden Teils des Körperteils (10) elastisch vorgespannt ist.

10. Vorrichtung nach Anspruch 5 oder 8, bei der die Komponenten der Steuermittel, die eine relative Gleitbewegung ausführen können, in Form einer ausziehbaren Stütze (20) vorliegen, die an einem Ende am Körperteil und an dem anderen Ende am Nocken (12) oder dem Gestänge (44) schwenkbar befestigt ist, um die Schwenkbewegung davon zu steuern.

11. Vorrichtung nach Anspruch 5, bei der das Rastmittel (28) der Steuermittel direkt zwischen dem Nocken (12B) und dem Körperteil (20B) wirkt.

12. Vorrichtung nach Anspruch 5, bei der ein Paar jener Nocken (12B) in entgegengesetzter Beziehung schwenkbar am Körperteil (55) so befestigt ist, daß ein Schwenken der Nocken in ihre Klemmpositionen zunehmend die Lücke zwischen den Klemmflächen der Nocken verengt, wodurch ein festes Klemmen eines sich im Gebrauch dazwischen erstreckenden länglichen Glieds (17A) bewirkt wird.

13. Vorrichtung nach Anspruch 1, bei der die Verriegelungsmittel ein Verriegelungsglied (21C) enthalten, das gleitbar in einem am Körperteil befestigten Gehäuse (23C) befestigt ist, wobei die Steuermittel zwischen dem Verriegelungsglied und dem Gehäuse wirken und das Körperteil zur gleitenden Aufnahme eines Pendelglieds (60) in Form eines röhrenförmigen Gehäuses (61) vorliegt, wobei das Verriegelungsglied in das Gehäuse hineinragt, um den Umfang des Pendelglieds in Eingriff zu nehmen, in dem eine Umfangsaussparung (62) ausgebildet ist, um das Verriegelungsglied im Verriegelungszustand des Verriegelungsmittels aufzunehmen und zu veranlassen, daß das Verriegelungsmittel gemäß Gleitbewegungen des Pendelglieds im Gehäuse in seine freien oder Verriegelungszustände gebracht wird.

14. Vorrichtung nach Anspruch 1, bei der das Körperteil ein röhrenförmiges Gehäuse (67) zur Aufnahme eines Pendelteils (65) mit einem im Gehäuse gleitend angeordneten Eingriffsteil enthält, wobei das Verriegelungsmittel ein Kniehebelglied (68) mit einer Querstrebe (69), die schwenkbar gegenüber dem Gehäuse befestigt ist und wovon ein Endteil sich bei Drehung des Kniehebelglieds in eine Richtung durch eine Öffnung in der Gehäusewand in das Gehäuse erstrecken kann, und mit einem Schenkelteil (70) enthält, der von der Querstrebe nach unten weist und einen Endteil aufweist, der sich bei Drehung des Kniehebelglieds in die andere Richtung durch eine Öffnung in der Gehäusewand in das Gehäuse erstrecken kann, und wobei die gleitbaren Komponenten der Steuermittel in Form einer ausziehbaren Stütze (20D) vorliegen, die an einem Ende gegenüber dem Gehäuse und an dem anderen Ende am anderen Endteil der Querstrebe (69) des Kniehebelglieds (68) schwenkbar befestigt ist, wodurch aufeinanderfolgende Gleitbewegungen des Pendelteils im Gehäuse in entgegengesetzten Richtungen gegenüberliegende Enden des Eingriffsteils davon dazu veranlassen, die Querstrebe und den Schenkel des Kniehebelglieds abwechselnd in Eingriff zu nehmen und dadurch aufeinanderfolgende freie und Verriegelungszustände davon unter Steuerung der Steuermittel zu veranlassen.

15. Vorrichtung nach Anspruch 2, bei der die Verriegelungsmittel mindestens ein Verriegelungsglied (257), das an einer der Komponenten (251) zur Ausführung einer allgemein quer zur relativen Gleitrichtung der Komponenten liegenden Bewegung vorgesehen ist, und Nockenmittel (258) enthalten, die an der anderen der Komponenten (250) vorgesehen und dazu geeignet sind, auf das Verriegelungsglied einzuwirken, es in einer verriegelten Position davon zu halten und es dem Verriegelungsglied zu gestatten, sich gemäß relativer Gleitbewegung der Komponenten zwischen Positionen, in denen sich die Verriegelungsmittel (252, 256) in einem eingerasteten oder nicht eingerasteten Zustand oder umgekehrt befinden, in eine nicht verriegelte Position davon zu bewegen.

16. Vorrichtung nach Anspruch 2 in Form einer Einsteck-Befestigungsvorrichtung (290) in Kombination mit einem Aufnahme-Buchsenteil (291) zum Einlassen in einer Wandkonstruktion, in die die Befestigungsvorrichtung im Gebrauch freigebbar befestigt werden kann.

17. System, das die Kombination von Anspruch 16 enthält und weiterhin ein Sicherheitsgurtwerk- oder Sicherheitsgurt-Befestigungssystem und eine Sicherheitsleine oder ein Sicherheitsreep (410) zur Verbindung mit dem Sicherheitsgurtwerk oder -gurt aufweist, die bzw. das einen Endstecker (411) zur Befestigung mit der Einsteck-Befestigungsvorrichtung enthält.

18. System nach Anspruch 17, bei dem mehrere Aufnahmebuchsen (291) zur Positionierung in beabstandeten Positionen in einer Wandkonstruktion vorgesehen sind.

19. System nach Anspruch 18, bei dem die Sicherheitsleine oder das Sicherheitsreep (410) an ihren bzw. seinen jeweils gegenüberliegenden Enden Endstecker (411, 412) zur Befestigung an jeweiligen Einsteck-Befestigungsvorrichtungen (290) aufweist.

20. System nach Anspruch 19, bei dem die Sicherheitsleine oder das Sicherheitsreep durch eine Öse (417) am Sicherheitsgurtwerk oder -gurt verläuft, durch die keiner der beiden Endstecker (411, 412) davon paßt.

## Revendications

1. Dispositif de serrage ou de blocage desserrable, comprenant une partie de corps (10) destinée à coopérer par coulissement avec une autre partie (17) devant être serrée ou bloquée de manière desserrable par rapport à la partie de corps, et des moyens d'accrochage (22, 26; 28) pouvant venir en prise les uns avec les autres, qui sont actionnés par mouvements relatifs de composants (21, 23) coopérants de ceux-ci, lesdits moyens d'accrochage étant prévus pour venir en prise automatiquement dans une position accrochée lorsque les moyens d'accrochage sont dans une première position et que les composants sont d'abord déplacés les uns par rapport aux autres dans une première direction dans une mesure prédéterminée de manière à limiter tout mouvement relatif ultérieur dans la direction opposée, et étant amenés automatiquement dans une position décrochée par une mesure prédéterminée de mouvement relatif depuis la position accrochée dans ladite première direction, permettant le mouvement libre relatif ultérieur des composants dans ladite direction opposée, lesdits moyens d'accrochage étant alors automatiquement ramenés dans ladite première position par mouvement relatif des composants au-delà d'une mesure prédéterminée dans ladite direction opposée, caractérisé par des moyens de serrage ou de blocage (12; 40; 21c; 68) montés mobiles sur la partie de corps (10) pour pouvoir se déplacer entre une position libre, et une position de serrage ou de blocage dans laquelle une charge appliquée au dispositif est reçue par lesdits moyens de serrage ou de blocage, et des moyens de contrôle (20) pour contrôler le mouvement desdits moyens de serrage ou de blocage entre ladite position libre et ladite position de serrage ou de blocage, lesdits moyens de contrôle comportant lesdits moyens d'accrochage (22, 26; 28) comprenant lesdits composants (21, 23) d'accrochage relativement mobiles, lesdites positions libre, et de serrage ou de blocage desdits moyens de serrage ou de blocage correspondant auxdites positions accrochée et décrochée, ou vice versa, desdits moyens d'accrochage.

2. Dispositif de blocage pour un dispositif de blocage, de couplage ou de support desserrable, ayant des parties pouvant coulisser les unes par rapport aux autres devant être bloquées de manière desserrable à l'encontre de tout mouvement relatif dans une direction, ledit dispositif comprenant une paire de composants (211, 219) coopérants pouvant coulisser l'un par rapport à l'autre, et comprenant des moyens d'accrochage (215; 225) pouvant venir en prise les uns avec les autres, agissant entre lesdits composants (211, 219), lesquels moyens d'accrochage étant actionnés par les mouvements relatifs desdits composants (211, 219), lesdits moyens d'accrochage étant prévus pour venir en prise automatiquement dans une position accrochée lorsque les moyens d'accrochage sont dans une première position et que les composants sont d'abord déplacés les uns par rapport aux autres dans une première direction dans une mesure prédéterminée de manière à limiter tout mouvement relatif ultérieur dans la direction opposée, et étant amenés automatiquement dans une position décrochée par une mesure prédéterminée de mouvement relatif depuis la position accrochée dans ladite première direction, permettant le mouvement libre relatif ultérieur des composants dans ladite direction opposée, lesdits moyens d'accrochage étant alors automatiquement ramenés dans ladite première position par mouvement relatif des composants au-delà d'une mesure prédéterminée dans ladite direction opposée, caractérisé par des moyens de serrage ou de blocage (217; 239; 257; 280; 297; 349) montés mobiles sur l'un desdits composants (211) pour pouvoir se déplacer avec ledit composant dans une direction généralement transversale à la direction de mouvement de coulissement relatif des composants (211, 219) entre des positions bloquée et débloquée desdits moyens de serrage ou de blocage, correspondant aux positions accrochée et décrochée, ou vice versa, desdits moyens d'accrochage (215; 225).

3. Dispositif selon la revendication 1 ou 2, dans lequel lesdits moyens d'accrochage comprennent une butée (22, 26) sur l'un (23) des composants et un cliquet rotatif (28) monté sur l'autre composant (21), destiné à tourner entre des positions dans lesquelles il coopère ou non avec ladite butée lors du mouvement relatif des composants, et des moyens de positionnement pour positionner le cliquet dans une série de positions angulaires de celui-ci lors d'une séquence d'accrochage ou de desserrage desdits moyens d'accrochage, ledit cliquet pouvant tourner en réalisant des tours complets, lesdits moyens de positionnement comprenant des moyens élastiques (31, 32) prévus sur ledit autre composant (21) et en prise avec la périphérie du cliquet ou une partie associée à celui-ci pour positionner temporairement le cliquet dans lesdites positions angulaires lors desdites séquences d'accrochage et de desserrage.

4. Dispositif selon la revendication 3, dans lequel ladite portion périphérique a généralement la forme d'un parallélogramme, lesdits moyens élastiques (31, 32) venant en prise avec chaque côté successif de la portion périphérique en forme de parallélogramme associée au cliquet (28) lorsque le cliquet est mis en rotation, en venant en prise et en se libérant de ladite butée de manière à faire tourner et à positionner le cliquet dans la position angulaire requise pour l'étape suivante dans une séquence de blocage ou de desserrage, ledit cliquet ayant une paire de bords périphériques opposés qui sont formés avec des évidements ou des crans (29) pour pouvoir recevoir une portion de coin de ladite butée dans la position accrochée des moyens d'accrochage.

5. Dispositif selon la revendication 1, dans lequel lesdits moyens de serrage comprennent une came (12) montée à pivotement sur ladite partie de corps (10) et ayant une surface de serrage courbe (13) formée de manière à coopérer avec une portion opposée de la partie de corps de manière à réduire l'écart entre celles-ci lors de la rotation de la came dans une direction de manière à serrer un organe allongé (17) s'étendant entre celles-ci en fonctionnement.

6. Dispositif selon la revendication 5, comportant des moyens de montage à pivotement (15) pour la came (12), qui sont montés à coulissement sur la partie de corps (10) pour pouvoir s'approcher et s'éloigner de ladite portion de la partie de corps pour faciliter l'enfilage d'un organe allongé (17) dans le dispositif et pour pouvoir recevoir des organes allongés de différentes dimensions en section transversale, des moyens élastiques (16) étant prévus pour incliner lesdits moyens de montage à pivotement en direction de ladite portion de la partie de corps.

7. Dispositif selon la revendication 6, dans lequel ladite came (12) agit sur un organe allongé (17) en prise en fonctionnement avec le dispositif, par l'intermédiaire d'une barre de pression (40) reliée à la came (12A) et sur laquelle agit ladite surface de serrage courbe.

8. Dispositif selon la revendication 1, dans lequel lesdits moyens de serrage comprennent une barre de pression (40) pouvant s'approcher et s'éloigner d'une portion opposée de la partie de corps (10), en relation généralement parallèle à celle-ci, au moyen d'une liaison à pivotement (43, 44) entre la barre de pression (40) et la partie de corps (10).

9. Dispositif selon la revendication 8, dans lequel la barre de pression (40) est montée sur la liaison de manière à pouvoir s'approcher et s'éloigner de ladite portion opposée de la partie de corps, pour faciliter l'enfilage d'un organe allongé (17) dans le dispositif et pour pouvoir recevoir des organes allongés de dimensions différentes en section transversale, la barre de pression (40) étant inclinée de manière élastique en direction de ladite portion opposée de la partie de corps (10).

10. Dispositif selon la revendication 5 ou la revendication 8, dans lequel lesdits composants coulissables les uns par rapport aux autres desdits moyens de contrôle ont la forme d'une jambe de force à ressort (20) montée à pivotement, à l'une de ses extrémités, sur la partie de corps et à son autre extrémité, sur ladite came (12) ou ladite liaison (44) pour en contrôler le mouvement de pivotement.

11. Dispositif selon la revendication 5, dans lequel ledit moyen d'accrochage (28) desdits moyens de contrôle agit directement entre ladite came (12B) et ladite partie de corps (20B).

12. Dispositif selon la revendication 5, dans lequel une paire desdites cames (12B) est montée à pivotement sur ladite partie de corps (55) en relation opposée de sorte que le pivotement des cames dans leurs positions de serrage raccourcisse progressivement l'écart entre les surfaces de serrage des cames, provoquant ainsi un serrage positif d'un organe allongé (17A) s'étendant, en fonctionnement, entre celles-ci.

13. Dispositif selon la revendication 1, dans lequel lesdits moyens de blocage comprennent un organe de blocage (21C) monté coulissant dans un boîtier (23C) monté sur la partie de corps avec lesdits moyens de contrôle agissant entre ledit organe de blocage et ledit boîtier, ladite partie de corps ayant la forme d'un logement tubulaire (61) pour recevoir à coulissement un organe navette (60), ledit organe de blocage se projetant dans le logement pour venir en prise avec la périphérie de l'organe navette qui a un évidement périphérique (62) formé pour recevoir ledit organe de blocage dans la position de blocage desdits moyens de blocage et pour mettre lesdits moyens de blocage dans leurs positions libre et de blocage en fonction des mouvements de coulissement de l'organe navette dans le logement.

14. Dispositif selon la revendication 1, dans lequel ladite partie de corps comprend un logement tubulaire (67) destiné à recevoir une partie navette (65) ayant une portion de prise disposée à coulissement dans le logement, lesdits moyens de blocage comprenant un organe à bascule (68) ayant un croisillon (69) monté à pivotement par rapport au logement, une portion d'extrémité de ce croisillon pouvant s'étendre dans le logement par une ouverture dans la paroi de ce logement lors de la rotation de l'organe à bascule dans une direction, et une portion de branche (70) dépendant du croisillon et ayant une portion d'extrémité pouvant s'étendre dans le logement par une ouverture dans la paroi de ce logement lors de la rotation de l'organe à bascule dans l'autre direction et lesdits composants coulissables desdits moyens de contrôle ayant la forme d'une jambe de force à ressort (20D) montée à pivotement à l'une de ses extrémités par rapport au logement et à son autre extrémité sur l'autre portion d'extrémité du croisillon (69) de l'organe à bascule (68), les mouvements de coulissement séquentiels de la partie navette dans le logement dans des directions opposées faisant venir en prise les extrémités opposées de ladite portion de prise de la partie navette avec ledit croisillon et la branche de l'organe à bascule provoquant à son tour les positions séquentielles libre et de blocage de celui-ci sous le contrôle desdits moyens de contrôle.

15. Dispositif selon la revendication 2, dans lequel lesdits moyens de blocage comprennent au moins un organe de blocage (257) prévu sur l'un des composants (251) pour pouvoir se déplacer généralement transversalement à ladite direction de coulissement relatif des composants et des moyens de came (258) prévus sur l'autre des composants (250) prévus pour agir sur l'organe de blocage et pour le maintenir dans une position bloquée et pour permettre à l'organe de blocage de se déplacer dans une position débloquée en fonction du mouvement de coulissement relatif des composants entre les positions dans lesquelles lesdits moyens d'accrochage (252, 256) sont dans une position accrochée ou décrochée, ou vice versa.

16. Dispositif selon la revendication 2, en forme de dispositif d'attache enfichable (290) en combinaison avec une partie de douille réceptrice (291) à encastrer dans une structure de mur dans laquelle le dispositif d'attache peut être fixé de manière desserrable en fonctionnement.

17. Système comprenant la combinaison de la revendication 16, comportant en outre un système d'attache de harnais de sécurité ou de ceinture de sécurité et un filin de sécurité ou une ride (410) destinés à être raccordés au harnais de sécurité ou à la ceinture de sécurité et ayant un raccord d'extrémité (411) pour les attacher au dispositif d'attache enfichable.

18. Système selon la revendication 17, dans lequel une pluralité de douilles réceptrices (291) est prévue pour être placée en des positions espacées dans une structure murale.

19. Système selon la revendication 18, dans lequel ledit filin de sécurité ou ladite ride (410) ont des raccords d'extrémité (411, 412) à leurs extrémités opposées respectives pour les attacher à des dispositifs d'attache enfichables (290) respectifs.

20. Système selon la revendication 19, dans lequel le filin de sécurité ou la ride passent par un oeillet (417) sur le harnais de sécurité ou la ceinture de sécurité, qui ne permet pas le passage de l'un ou l'autre des raccords d'extrémités (411, 412) de ceux-ci.
